# EUROPÄISCHE PATENTSCHRIFT

(11) **EP 3 320 044 B1**
(45) Veröffentlichungstag und Bekanntmachung des Hinweises auf die Patenterteilung: **03.07.2019**
(21) Anmeldenummer: 16734396.1
(22) Anmeldetag: 04.07.2016
(51) Int. Cl.: C08L 69/00

(54) **POLYCARBONAT-ZUSAMMENSETZUNGEN FÜR GALVANOANWENDUNGEN MIT HOHER WÄRMEFORMBESTÄNDIGKEITSANFORDERUNG**
POLYCARBONATE BLENDS WITH HIGH THERMOFORMING RESISTANCE REQUIREMENT FOR GALVANIC APPLICATIONS
COMPOSITIONS DE POLYCARBONATE POUR ELECTROPLACAGES AYANT UNE HAUTE EXIGENCE DE RESISTANCE THERMIQUE

(30) Priorität: 06.07.2015 EP 15175422
(43) Veröffentlichungstag der Anmeldung: 16.05.2018
(73) Patentinhaber: Covestro Deutschland AG, 51373 Leverkusen (DE)
(72) Erfinder: SEIDEL, Andreas, 41542 Dormagen (DE); SCHWARTMANN, Wolfgang, 42699 Solingen (DE); WENZ, Eckhard, 50937 Köln (DE); WEIMAR, Peter, 51371 Leverkusen (DE)
(74) Vertreter: Levpat
(86) Internationale Anmeldenummer: PCT/EP2016/065675
(87) Internationale Veröffentlichungsnummer: WO 2017/005682

(56) Entgegenhaltungen:
- EP-A1- 0 000 146
- CN-A- 102 146 203
- DE-A1- 3 919 043

## Beschreibung

Die Erfindung betrifft Polycarbonat-Zusammensetzungen mit gutem Verarbeitungsverhalten im Spritzguss, guter Zähigkeit und hoher Wärmeformbeständigkeit, welche mittels der für ABS- und ABS+PC-Zusammensetzungen bekannten und industriell etablierten Prozesse galvanisierbar sind, wobei die so galvanisierten Bauteile ein gute Haftung von mehrlagiger Metallschicht zu Substrat (d. h. Kunststoffträger) auch unter hoher Einsatztemperatur und starken Temperaturschwankungen aufweisen.

Die Galvanisierung von ABS- und ABS-Polycarbonat-Zusammensetzungen ist aus der Literatur bekannt.

Mariola Brandes, "The new generation of Futuron - A direct metallisation process for plastics with low Pd content" Galvanotecnica e Nuove Finiture (2003), 13(2), 100-102 offenbart beispielsweise einen Prozess zur Galvanisierung von ABS- und ABS+PC-Zusammensetzungen.

Mariola Brandes, "Direct metalizing of ABS and ABS/PC with increased PC content ", Galvanotechnik (2007), 98(4), 872-875 " offenbart ein verbessertes Verfahren, welches erstmalig die Metallisierung von Polycarbonat-ABS-Formmassen mit bis zu 65 Gew.-% Polycarbonat erlaubt. Zuvor war es nur möglich gewesen, solche Zusammensetzungen mit einem Polycarbonat-Gehalt von maximal 45 Gew.-% zu galvanisieren.

DE102008047833 (A1) offenbart, daß ABS und ABS/PC mittels bekannter Verfahren der Kunststoffgalvanisierung beschichtbar und insbesondere verchrombar sind, wogegen Polycarbonat dagegen bei den Bedingungen des üblichen Kunststoffgalvanisierens inert ist und keine Beschichtung annimmt.

WO 2013/115903 A1 offenbart galvanisierbare PC+ABS-Zusammensetzungen mit erhöhtem Polycarbonat-Anteil und mit verbesserter Haftung der Metallschicht zum Kunststoffsubstrat enthaltend 40 bis 75 Gew.-% Polycarbonat, 24 bis 53 Gew.-% eines ersten Schlagzähmodifikators und 1 bis 7 Gew.-% eines zweiten Schlagzähmodifikators.

CN 102146203 A offenbart PC+ABS-Blends mit verbesserter Galvanisierbarkeit und guten mechanischen Eigenschaften, guter Wärmebeständigkeit und guter Verarbeitbarkeit im Spritzguss enthaltend 20 bis 70 Gew.-% Polycarbonat, 20 bis 75 Gew.-% ABS, 2-10 Gew.-% kautschukreiches butadienbasierendes Pfropfpolymerisat, 0,2 bis 0,5 Gew.-% Calciumcarbonat, 0 bis 1 Gew.-% Antioxidanz und 0 bis 1 Gew.-% Gleitmittel.

EP 0 183 167 B1 offenbart PC+ABS-Zusammensetzungen mit exzellenter Wärmeformbeständigkeit, Zähigkeit und Verarbeitbarkeit im Spritzgussverfahren, welche sich durch eine verbesserte Galvanisierbarkeit auszeichnen, enthaltend 10 bis 90 Gew.-% aromatisches Polycarbonat, 10 bis 90 Gew.-% eines mehrschaligen, kautschukbasierten Pfropfpolymerisats und optional bis zu 60 Gew.- % eines Vinylcopolymerisats.

Die in diesem Stand der Technik genannten, für die Galvanisierung geeigneten ABS-Polycarbonat- und Polycarbonat-ABS-Zusammensetzungen weisen aber für spezielle Anwendungsbereiche eine zu geringe Wärmeformbeständigkeit und aus ihnen hergestellte galvanisierte Bauteile insofern eine für diese Anwendungsbereiche zu geringe maximale Gebrauchstemperatur auf.

Beispiele für derartige spezielle Anwendungsbereiche für galvanisierte Bauteile mit erhöhter Anforderung an die Wärmeformbeständigkeit sind (dekorative) Teile von Automobilen (insbesondere Anwendungen unterhalb der Motorhaube oder im Abgasstrombereich), elektrisch betriebene Geräte (beispielsweise Heizlüfter, Toaster, Wasserkocher / Heißwasserzubereiter, Kaffeemaschinen, Haartrockner, Öfen, etc.), Haushaltsgegenstände unter hoher Temperaturbelastung oder Teile davon (beispielsweise Griffe von Kochtöpfen, Druckkochtöpfen oder Grills), Teile von Sonnenkollektoren und Lichtreflektoren sowie Funktionselemente zur gezielten Abführung von Wärme. Diese beispielhaften Anwendungsbereiche haben gemein, dass die Bauteile unter hoher Temperaturbelastung stehen, weil sie in räumlicher Nähe zu Wärmequellen (beispielsweise Motoren, elektrisch betriebenen Heizvorrichtungen, heißen Gasströmen, fokussierter Lichteinstrahlung) zum Einsatz kommen und bestimmungsgemäß auch hohen Temperaturschwankungen ausgesetzt sind. Unter diesen extremen Einsatzbedingungen sollen die galvanisierten Bauteile bestimmungsgemäß formstabil bleiben und eine hinreichende Haftung der Metallschicht zum Kunststoffsubstrat aufweisen sowie eine stabile Oberflächenkosmetik zeigen. Unter den Temperaturwechseln dürfen insbesondere keinerlei blasenförmige oder gar großflächige Metallablösungen auftreten.

Zusammensetzungen mit erhöhter Wärmeformbeständigkeit gegenüber solchen PolycarbonatFormmassen, bei denen das Polycarbonat nur auf Bisphenol A Einheiten basiert, sind ebenfalls aus der Literatur bekannt.

US 2011 0060106 A1 offenbart Polycarbonat-Zusammensetzungen mit verbesserter Wärmebeständigkeit, Tieftemperaturzähigkeit und Fließfähigkeit enthaltend Polycarbonat basierend auf n-Phenylphenolphthalein (PPPBP) als Wiederholungseinheit, ein davon unterschiedliches zweites Polycarbonat und einen Schlagzähmodifikator.

DE 38 32 396 A1 offenbart Polycarbonate basierend auf Dihydroxydiphenylcycloalkanen mit erhöhter Glasübergangstemperatur.

DE 39 19 043 A1 offenbart Polycarbonat-Zusammensetzungen mit verbesserter Wärmeformbeständigkeit und guter Zähigkeit enthaltend Polycarbonat basierend auf substituiertem Dihydroxydiphenylcycloalkan, Polycarbonat basierend auf beispielsweise Bisphenol-A und ein kautschukmodifiziertes Pfropfpolymerisat.

DE 39 13 114 A1 offenbart Polycarbonat-Zusammensetzungen mit verbesserter Wärmeformbeständigkeit und guter Zähigkeit enthaltend Polycarbonat basierend auf substituiertem Dihydroxydiphenylcycloalkan, Polycarbonat basierend auf beispielsweise Bisphenol-A und ein Silikonkautschuk-modifiziertes Pfropfpolymerisat.

DE 39 14 946 A1 offenbart Polycarbonat-Zusammensetzungen mit hoher Wärmeformbeständigkeit und verbesserter Kerbschlagzähigkeit und Spannungsrißbeständigkeit unter Chemikalieneinwirkung enthaltend Polycarbonat basierend auf substituiertem Dihydroxyphenylcycloalkan, kautschukbasiertes Pfropfpolymerisat und optional mindestens ein weiteres thermoplastisches Harz.

EP 0 401 629 A2 offenbart Polycarbonat-Zusammensetzungen mit verbesserter Wärmeformbeständigkeit und guter Zähigkeit enthaltend Polycarbonat basierend auf substituiertem Dihydroxydiphenylcycloalkan, Vinylcopolymerisat und kautschukbasiertes Pfropfpolymerisat.

Aus den genannten Anmeldungen lassen sich aber keinerlei Hinweise auf die Galvanisierbarkeit dieser Polycarbonat-Zusammensetzungen mit verbesserter Wärmeformbeständigkeit ableiten und es sind insofern auch keine Informationen zur Haftung einer über einen Galvanisierungsprozess aufgebrachten mehrlagiger Metallschicht zum Substrat (d. h. Kunststoffträger), insbesondere unter hoher Einsatztemperatur und starken Temperaturschwankungen, offenbart.

Aufgabe der vorliegenden Erfindung war daher die Bereitstellung von Zusammensetzungen, die sich sowohl durch ein gutes Verarbeitungsverhalten im Spritzguss (d.h. eine gute Schmelzefließfähigkeit), hohe Zähigkeit und über eine verbesserte Wärmeformbeständigkeit, gemessen an einem Vicat B/120 nach ISO 306 (in der Version von 2013) von mindestens 135°C, bevorzugt mindestens 140°C sowie durch gute Galvanisierbarkeit, bevorzugt in einem für ABS- und ABS+PC-Zusammensetzungen bekannten und industriell etablierten Prozess, auszeichnen und sich zur Herstellung galvanisierter Bauteile eignen. Diese Bauteile sollen sich durch zufriedenstellende Haftung der mehrlagigen Metallschicht zum Kunststoffträger auszeichnen und schwankenden Gebrauchstemperaturen im Bereich von Raumtemperatur bis bevorzugt mindestens 135°C, besonders bevorzugt bis mindestens 140°C standhalten, ohne sich zu verformen oder in anderer Weise in ihrer visuellen Beschaffenheit zu verändern, das heißt insbesondere ohne Ablösung der mehrlagigen Metallschicht vom Kunststoffträger, welche sich beispielsweise in einer Blasenbildung äußern kann. Als zufriedenstellende Haftung der mehrlagigen Metallschicht zum Kunststoffträger wird im Allgemeinen ein Wert von mindestens 0,20 N/mm gemessen im Rollenschälversuch nach DIN 53494 (in der Version von 1984) angesehen.

Es wurde überraschenderweise gefunden, dass Zusammensetzungen bestehend aus
A) 70 bis 90 Gew.-Teilen, bevorzugt 75 bis 87 Gew.-Teilen, weiter bevorzugt 80 bis 85 Gew.-Teilen mindestens eines Polycarbonats,
B) 10 bis 30 Gew.-Teilen, bevorzugt 13 bis 25 Gew.-Teilen, weiter bevorzugt 15 bis 20 Gew.-Teilen mindestens eines Pfropfpolymerisats enthaltend eine Dien enthaltende kautschukelastische partikuläre Pfropfgrundlage und eine Vinyl(co)polymerisathülle,
C) 0 bis 15 Gew.-Teilen, bevorzugt 0,1 bis 5 Gew.-Teilen, besonders bevorzugt 0,2 bis 3 Gew.-Teilen mindestens eines Additivs,
   wobei die Summe der Gewichtsteile der Komponenten A) und B) in der Zusammensetzung auf 100 normiert ist,
   (i) dadurch gekennzeichnet, dass der Kautschukgehalt aus Komponente B in der Zusammensetzung mindestens 6 Gew.-%, bevorzugt mindestens 7 Gew.-%, besonders bevorzugt mindestens 9 Gew.-% beträgt,
   (ii) dadurch gekennzeichnet, dass das Verhältnis K/S der Gewichtsanteile an Dien enthaltender kautschukelastischer partikulärer Pfropfgrundlage aus Komponente B) in der Zusammensetzung (=K) zur Summe aus freiem, das heißt nicht an die Kautschukgrundlage im Pfropfpolymer gemäß Komponente B) kovalent gebundenem Vi-ny(co)polymerisat aus Komponente B) und etwaigen freiem Vinyl(co)polymerisat aus Komponente C) in der Zusammensetzung (=S) mindestens 1,5, bevorzugt mindestens 1,8, besonders bevorzugt mindestens 2,1 beträgt,
   (iii) dadurch gekennzeichnet, dass die Komponente A) mindestens eine Monomereinheit enthält, welche ausgewählt ist aus der Gruppe bestehend aus Monomereinheiten beschrieben durch die allgemeine Formel (2) 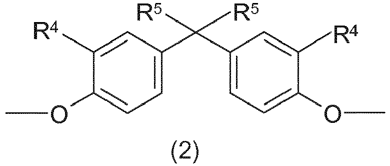 in der
      R⁴ für H, lineare oder verzweigte C₁-C₁₀ Alkyl, bevorzugt lineare oder verzweigte C₁-C₆ Alkyl, besonders bevorzugt für lineare oder verzweigte C₁-C₄Alkyl, ganz besonders bevorzugt für H oder C₁-Alkyl (Methyl) steht, und
      R⁵ für lineare oder verzweigte C₁-C₁₀ Alkyl, bevorzugt lineare oder verzweigte C₁-C₆ Alkyl, besonders bevorzugt für lineare oder verzweigte C₁-C₄ Alkyl, ganz besonders bevorzugt für C₁-Alkyl (Methyl) steht,
      und mindestens eine von einer Bis-(4-hydroxyphenyl)-Verbindung abgeleitete Monomereinheit, die über die 1,1'-Stellung eines cyclischen, gegebenenfalls mit Heteroatomen substituierten Kohlenwasserstoffs verbrückt ist, enthält, bevorzugt eine solche über die 1,1'-Stellung eines cyclischen, Kohlenwasserstoffs verbrückten Monomereinheit, die durch eine der allgemeinen Formeln (1a), (1b), (1c) und (1d) beschrieben wird, besonders bevorzugt eine solche über die 1,1'-Stellung eines cyclischen, Kohlenwasserstoffs verbrückten Monomereinheit, die durch die allgemeine Formel (1a) beschrieben wird 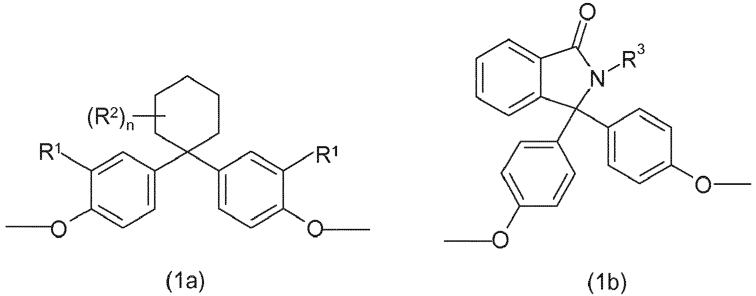 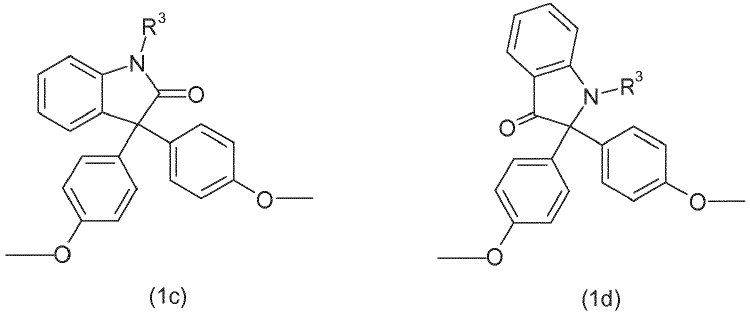 in denen
      R¹ für Wasserstoff oder C₁-C₄-Alkyl, bevorzugt für Wasserstoff,
      R² für C₁-C₄-Alkyl, bevorzugt Methyl,
      n für 0, 1, 2 oder 3, bevorzugt 3 steht, und
      R³ für C₁-C₄-Alkyl, Aralkyl oder Aryl, bevorzugt für Methyl oder Phenyl, ganz besonders bevorzugt für Phenyl, steht,
   (iv) dadurch gekennzeichnet, dass der Anteil (A_{cyc}) an von Bis-(4-hydroxyphenyl)-Verbindungen abgeleiteten Monomereinheiten, die über die 1,1'-Stellung eines cyclischen, gegebenenfalls mit Heteroatomen substitutierten Kohlenwasserstoffs verbrückt sind, bezogen auf die Summe aller von Bisphenolen abgeleiteten Monomereinheiten in der Komponente A) im Bereich von 5 bis 40 Gew.-%, bevorzugt im Bereich von 8 bis 37 Gew.-%, besonders bevorzugt im Bereich von 10 bis 35 Gew.-% liegt und
   (v) dadurch gekennzeichnet, dass die Komponente A) eine relative Lösungsviskosität von 1,20 bis 1,28, bevorzugt von 1,21 bis 1,27, besonders bevorzugt von 1,22 bis 1,26 bestimmt nach DIN 51562 in Methylenchlorid aufweist,
   die erfindungsgemäße Aufgabe lösen.

Als Monomereinheit in Komponente A), die über die 1,1'-Stellung eines cyclischen, gegebenenfalls mit Heteroatomen substituierten Kohlenwasserstoffs verbrückt ist, kommt bevorzugt mindestens ein Vertreter, besonders bevorzugt genau ein Vertreter ausgewählt aus der Gruppe bestehend aus 1,1-Bis-(4-hydroxyphenyl)- 3,3',5-trimethylcyclohexan (Bisphenol-TMC) und 2-Phenyl-3,3'-Bis-(4-hydroxyphenyl)-phthalimid (PPPBP) zum Einsatz.

In Bezug auf die mechanischen Eigenschaften, insbesondere die Kerbschlagzähigkeit, der aus diesen Zusammensetzungen hergestellten Formmassen erweisen sich solche Zusammensetzungen besonders vorteilhaft und insofern bevorzugt, in denen als Monomereinheit in Komponente A), die über die 1,1'-Stellung eines cyclischen, gegebenenfalls mit Heteroatomen substituierten Kohlenwasserstoffs verbrückt ist, 1,1-Bis-(4-hydroxyphenyl)-3,3',5-trimethylcyclohexan (Bisphenol-TMC) zum Einsatz kommt.

Hinsichtlich des Kautschukgehalts aus Komponente B in der Zusammensetzung ist die Obergrenze Kₘₐₓ nur durch den Anteil der Komponente B und den Kautschukanteil B.2 in der Komponente B festgelegt über die Formel Kₘₐₓ = B · B.2.

Hinsicht des Verhältnisses K/S gibt es keine Obergrenze, da es grundsätzlich vorteilhaft ist, den Anteil von S zu minimieren. In bevorzugter Ausführungsform enthält die Komponente C daher kein freies (d.h. nicht chemisch an eine Kautschukgrundlage gebundenes) Vinyl(co)polymerisat. Weiterhin bevorzugt ist daher der Einsatz einer Komponente B mit einem möglichst hohem Gelgehalt von mindestens 70 Gew.-%, besonders bevorzugt mindestens 75 Gew.-%, ganz besonders bevorzugt mindestens 80 Gew.-%.

In bevorzugter Ausführungsform kommt als Pfropfpolymer gemäß Komponente B) ein Pfropfpolymer basierend auf einer Dien enthaltenden kautschukelastischen partikulären Pfropfgrundlage zum Einsatz, dadurch gekennzeichnet, dass der Anteil der Kautschukpartikel in der Pfropfgrundlage mit einem Durchmesser von <200 nm mindestens 10 Gew.-%, bevorzugt mindestens 20 Gew.-% beträgt.

In einer weiteren bevorzugten Ausführungsform ist der Gehalt an freiem Vinyl(co)polymer in der Zusammensetzung (in Summe aus Komponente B und Komponente C) kleiner 7 Gew.-%, besonders bevorzugt kleiner 6 Gew.-%, insbesondere kleiner 5 Gew.-%.

Die erfindungsgemäßen Zusammensetzungen weisen eine Kerbschlagzähigkeit gemessen nach ISO 180/1A (Version von 1982) bei Raumtemperatur von mindestens 20 kJ/m², bevorzugt von mindestens 30 kJ/m² auf.

Ein weiterer Aspekt der vorliegenden Erfindung ist die Verwendung der zuvor beschriebenen Formmassen zur Herstellung von galvanisierten Bauteilen wie oben beschrieben.

Nachfolgend werden bevorzugte Ausführungsformen 1 bis 23 der vorliegenden Erfindung beschrieben:
1.) Zusammensetzungen bestehend aus
   A) 70 bis 90 Gew.-Teilen mindestens eines Polycarbonats,
   B) 10 bis 30 Gew.-Teilen mindestens eines Pfropfpolymerisats enthaltend eine Dien enthaltende kautschukelastische partikuläre Pfropfgrundlage und eine Vinyl(co)polymerisathülle,
   C) 0 bis 15 Gew.-Teilen mindestens eines Additivs,
      wobei die Summe der Gewichtsteile der Komponenten A) und B) in der Zusammensetzung auf 100 normiert ist,
      (i) dadurch gekennzeichnet, dass der Kautschukgehalt aus Komponente B in der Zusammensetzung mindestens 6 Gew.-% beträgt,
      (ii) dadurch gekennzeichnet, dass das Verhältnis K/S der Gewichtsanteile an Dien enthaltender kautschukelastischer partikulärer Pfropfgrundlage aus Komponente B) in der Zusammensetzung (=K) zur Summe aus freiem, das heißt nicht an die Kautschukgrundlage im Pfropfpolymer gemäß Komponente B) kovalent gebundenem Vi-ny(co)polymerisat aus Komponente B) und etwaigen freiem Vinyl(co)polymerisat aus Komponente C) in der Zusammensetzung (=S) mindestens 1,5 beträgt,
      (iii) dadurch gekennzeichnet, dass die Komponente A) mindestens eine Monomereinheit enthält, welche ausgewählt ist aus der Gruppe bestehend aus Monomereinheiten beschrieben durch die allgemeine Formel (2) 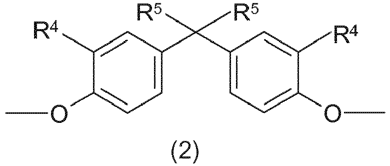 in der
         R⁴ für H, lineare oder verzweigte C₁-C₁₀ Alkyl, bevorzugt lineare oder verzweigte C₁-C₆ Alkyl, besonders bevorzugt für lineare oder verzweigte C₁-C₄Alkyl, ganz besonders bevorzugt für H oder C₁-Alkyl (Methyl) steht, und
         R⁵ für lineare oder verzweigte C₁-C₁₀ Alkyl, bevorzugt lineare oder verzweigte C₁-C₆ Alkyl, besonders bevorzugt für lineare oder verzweigte C₁-C₄ Alkyl, ganz besonders bevorzugt für C₁-Alkyl (Methyl) steht,
         und mindestens eine von einer Bis-(4-hydroxyphenyl)-Verbindung abgeleitete Monomereinheit enthält, die über die 1,1'-Stellung eines cyclischen, gegebenenfalls mit Heteroatomen substituierten Kohlenwasserstoffs verbrückt ist,
      (iv) dadurch gekennzeichnet, dass der Anteil (A_{cyc}) an von Bis-(4-hydroxyphenyl)-Verbindungen abgeleiteten Monomereinheiten, die über die 1,1'-Stellung eines cyclischen, gegebenenfalls mit Heteroatomen substitutierten Kohlenwasserstoffs verbrückt sind, bezogen auf die Summe aller von Bisphenolen abgeleiteten Monomereinheiten in der Komponente A) im Bereich von 5 bis 40 Gew.-% liegt und
      (v) dadurch gekennzeichnet, dass die Komponente A) eine relative Lösungsviskosität von 1,20 bis 1,28, bestimmt nach DIN 51562 in Methylenchlorid, aufweist.
2.) Zusammensetzung gemäß Ausführungsform 1, bestehend aus
   A) 80 bis 85 Gew.-Teilen mindestens eines aromatischen Polycarbonats,
   B) 15 bis 20 Gew.-Teilen mindestens eines Pfropfpolymerisats enthaltend eine Dien enthaltende kautschukelastische partikuläre Pfropfgrundlage und eine Vinyl(co)polymerisathülle,
   C) 0,2 bis 3 Gew.-Teilen mindestens eines Additivs,
   wobei die Summe der Gewichtsteile der Komponenten A) und B) in der Zusammensetzung auf 100 normiert ist.
3.) Zusammensetzung gemäß Ausführungsform 1 oder 2, dadurch gekennzeichnet, dass als Komponente C ein oder mehrere Additive ausgewählt aus der Gruppe bestehend aus Flammschutzmitteln, Antidrippingmitteln, Flammschutzsynergisten, Rauchinhibitoren , Gleit- und Entformungsmitteln, Nukleiermitteln, Antistatika, Leitfähigkeitsadditiven, Stabilisatoren, Fließfähigkeitspromotoren, Verträglichkeitsvermittlern, weiteren von Komponente B verschiedene Schlagzähigkeitsmodifikatoren, weitere polymeren Bestandteilen, Füll- und Verstärkungsstoffen sowie Farbstoffen und Pigmenten zum Einsatz kommen.
4.) Zusammensetzung gemäß einer der vorherigen Ausführungsformen, dadurch gekennzeichnet, dass der Kautschukgehalt aus Komponente B in der Zusammensetzung mindestens 9 Gew.-% beträgt.
5.) Zusammensetzung gemäß einer der vorherigen Ausführungsformen, dadurch gekennzeichnet, dass das Verhältnis K/S mindestens 2,1 beträgt.
6.) Zusammensetzung gemäß einer der vorherigen Ausführungsformen, dadurch gekennzeichnet, dass A_{cyc} zwischen 10 und 35 Gew.-% liegt.
7.) Zusammensetzung gemäß einer der vorherigen Ausführungsformen, dadurch gekennzeichnet, dass die von Bis-(4-hydroxyphenyl)-Verbindungen abgeleiteten Monomereinheiten, die über die 1,1'-Stellung eines cyclischen, gegebenenfalls mit Heteroatomen substituierten Kohlenwasserstoffs verbrückt sind, ausgewählt sind aus den Strukturen, die durch die Formeln 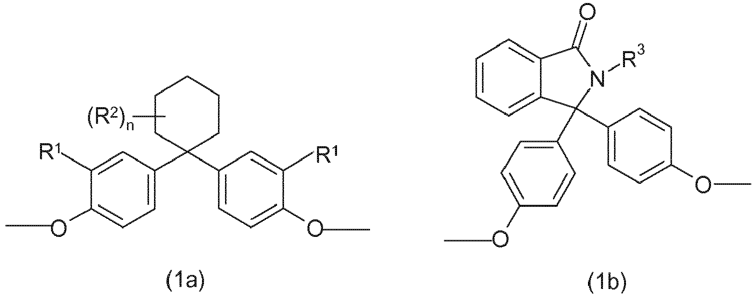 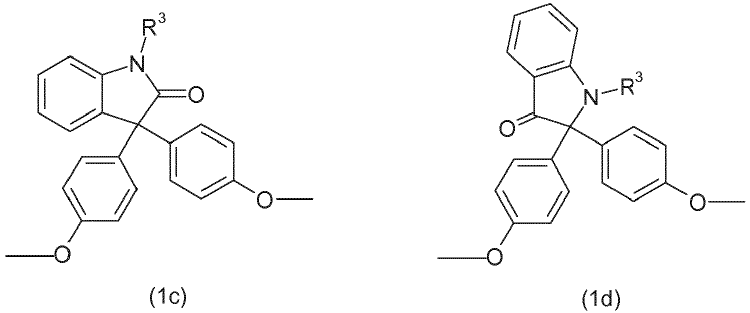 in denen
   R¹ für Wasserstoff oder C₁-C₄-Alkyl,
   R² für C₁-C₄-Alkyl,
   n für 0, 1, 2 oder 3 und
   R³ für C₁-C₄-Alkyl, Aralkyl oder Aryl steht,
   beschrieben sind.
8.) Zusammensetzung gemäß einer der vorherigen Ausführungsformen, dadurch gekennzeichnet, dass die von Bis-(4-hydroxyphenyl)-Verbindungen abgeleiteten Monomereinheiten, die über die 1,1'-Stellung eines cyclischen, gegebenenfalls mit Heteroatomen substituierten Kohlenwasserstoffs verbrückt sind, ausgewählt sind aus den Strukturen, die durch die Formel (1a) beschrieben werden.
9.) Zusammensetzung gemäß einer der vorherigen Ausführungsformen, dadurch gekennzeichnet, dass die von Bis-(4-hydroxyphenyl)-Verbindungen abgeleiteten Monomereinheit, die über die 1,1'-Stellung eines cyclischen, gegebenenfalls mit Heteroatomen substituierten Kohlenwasserstoffs verbrückt ist, 1,1-Bis-(4-hydroxyphenyl)-3,3',5-trimethylcyclohexan ist.
10.) Zusammensetzung gemäß einer der vorherigen Ausführungsformen, dadurch gekennzeichnet, dass die relative Lösungsviskosität der Komponente A im Bereich von 1,22 bis 1,26 liegt.
11.) Zusammensetzung gemäß einer der vorherigen Ausführungsformen, dadurch gekennzeichnet, dass bei Einsatz von Copolycarbonaten basierend auf mindestens einer Monomereinheit ausgewählt aus der Gruppe charakterisiert durch die allgemeinen Formel (1a) und mindestens einer Monomereinheit ausgewählt aus der Gruppe charakterisiert durch die allgemeinen Formel (2) die relative Lösungsviskosität dieses in Komponente A eingesetzten Copolymersim Bereich von 1,23 - 1,27 liegt.
12.) Zusammensetzung gemäß einer der vorherigen Ausführungsformen, dadurch gekennzeichnet, dass bei Einsatz von Homo- oder Copolycarbonaten basierend auf mindestens einer Monomereinheit ausgewählt aus der Gruppe charakterisiert durch die allgemeine Formel (2), welche keine von Bis-(4-hydroxyphenyl)-Verbindungen abgeleitete Monomereinheiten, die über die 1,1'-Stellung eines cyclischen, gegebenenfalls mit Heteroatomen substituierten Kohlenwasserstoffs verbrückt sind, enthalten, die relative Lösungsviskosität dieses in Komponente A eingesetzten Homo- oder Copolymersim Bereich von 1,20 - 1,28 liegt.
13.) Zusammensetzung gemäß einer der vorherigen Ausführungsformen, dadurch gekennzeichnet, dass der Anteil der Kautschukpartikel in der Pfropfgrundlage B.2 mit einem Durchmesser von <200 nm mindestens 20 Gew.-% beträgt.
14.) Zusammensetzungen gemäß einer der vorherigen Ausführungsform, dadurch gekennzeichnet, dass der Gehalt an freiem Vinyl(co)polymer in der Zusammensetzung (in Summe aus Komponente B und Komponente C) kleiner 7 Gew.-% ist.
15.) Zusammensetzungen gemäß einer der vorherigen Ausführungsform, dadurch gekennzeichnet, dass der Gehalt an freiem Vinyl(co)polymer in der Zusammensetzung (in Summe aus Komponente B und Komponente C) kleiner 5 Gew.-% ist.
16.) Zusammensetzungen gemäß einer der vorherigen Ausführungsform, dadurch gekennzeichnet, dass sie eine Wärmeformbeständigkeit gemäß Vicat B/120 nach ISO 306 in der Version von 2013 von mindestens 135°C aufweisen.
17.) Zusammensetzungen gemäß einer der vorherigen Ausführungsformen, dadurch gekennzeichnet, dass sie eine Kerbschlagzähigkeit gemessen nach ISO 180/1A in der Version von 1982 bei Raumtemperatur von mindestens 20 kJ/m² aufweisen.
18.) Zusammensetzungen bestehend aus
   A) 75 bis 87 Gew.-Teilen mindestens eines Polycarbonats,
   B) 13 bis 25 Gew.-Teilen mindestens eines Pfropfpolymerisats enthaltend eine Dien enthaltende kautschukelastische partikuläre Pfropfgrundlage und eine Vinyl(co)polymerisathülle,
   C) 0 bis 15 Gew.-Teilen mindestens eines Additivs,
      wobei die Summe der Gewichtsteile der Komponenten A) und B) in der Zusammensetzung auf 100 normiert ist,
      (i) dadurch gekennzeichnet, dass der Kautschukgehalt aus Komponente B in der Zusammensetzung mindestens 7 Gew.-% beträgt,
      (ii) dadurch gekennzeichnet, dass das Verhältnis K/S der Gewichtsanteile an Dien enthaltender kautschukelastischer partikulärer Pfropfgrundlage aus Komponente B) in der Zusammensetzung (=K) zur Summe aus freiem, das heißt nicht an die Kautschukgrundlage im Pfropfpolymer gemäß Komponente B) kovalent gebundenem Vi-ny(co)polymerisat aus Komponente B) und etwaigen freiem Vinyl(co)polymerisat aus Komponente C) in der Zusammensetzung (=S) mindestens 1,8 beträgt,
      (iii) dadurch gekennzeichnet, dass die Komponente A) mindestens eine Monomereinheit enthält, welche ausgewählt ist aus der Gruppe bestehend aus Monomereinheiten beschrieben durch die allgemeine Formel (2) 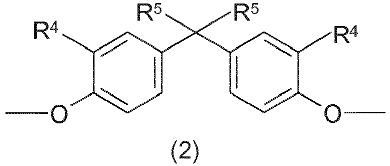 in der
         R⁴ für für H oder C₁-Alkyl (Methyl) steht und
         R⁵ für C₁-Alkyl (Methyl) steht,
         und mindestens eine von einer Bis-(4-hydroxyphenyl)-Verbindung abgeleitete Monomereinheit enthält, die über die 1,1'-Stellung eines cyclischen, gegebenenfalls mit Heteroatomen substituierten Kohlenwasserstoffs verbrückt ist und durch eine der allgemeinen Formeln (1a), (1b), (1c) und (1d) beschrieben wird, 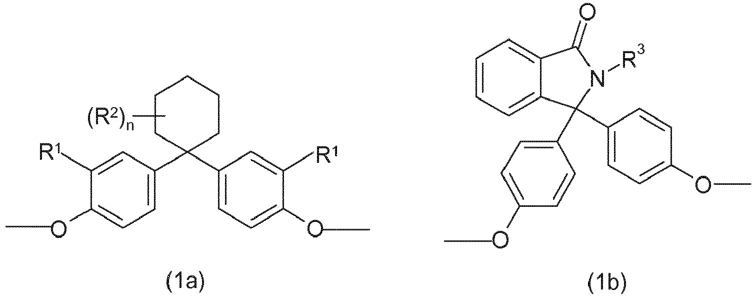 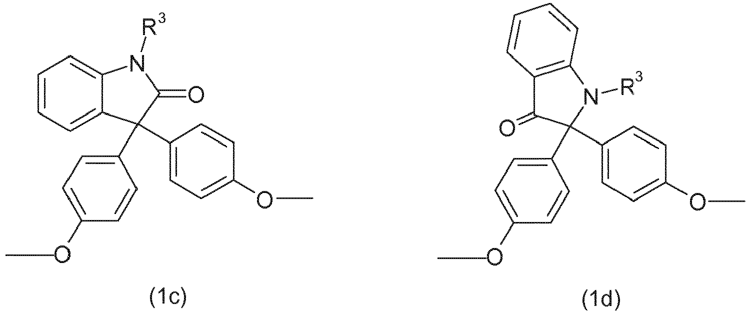 in denen
         R¹ für Wasserstoff oder C₁-C₄-Alkyl,
         R² für C₁-C₄-Alkyl,
         n für 0, 1, 2 oder 3 und
         R³ für für Methyl oder Phenyl steht,
      (iv) dadurch gekennzeichnet, dass der Anteil (A_{cyc}) an von Bis-(4-hydroxyphenyl)-Verbindungen abgeleiteten Monomereinheiten, die über die 1,1'-Stellung eines cyclischen, gegebenenfalls mit Heteroatomen substitutierten Kohlenwasserstoffs verbrückt sind, bezogen auf die Summe aller von Bisphenolen abgeleiteten Monomereinheiten in der Komponente A) im Bereich von 8 bis 37 Gew.-% liegt,
      (v) dadurch gekennzeichnet, dass die Komponente A) eine relative Lösungsviskosität von 1,21 bis 1,27 aufweist,
      (vi) dadurch gekennzeichnet, dass als Komponente C) ein oder mehrere Additive ausgewählt aus der Gruppe bestehend aus Flammschutzmitteln, Antidrippingmitteln, Flammschutzsynergisten, Rauchinhibitoren , Gleit- und Entformungsmitteln, Nukleiermitteln, Antistatika, Leitfähigkeitsadditiven, Stabilisatoren, Fließfähigkeitspromotoren, Verträglichkeitsvermittlern, weiteren von Komponente B verschiedene Schlagzähigkeitsmodifikatoren, weiteren polymeren Bestandteilen, Füll- und Verstärkungsstoffen sowie Farbstoffen und Pigmenten zum Einsatz kommen,
      (vii) dadurch gekennzeichnet, dass bei Einsatz von Copolycarbonaten basierend auf mindestens einer Monomereinheit ausgewählt aus der Gruppe charakterisiert durch die allgemeinen Formel (1a) und mindestens einer Monomereinheit ausgewählt aus der Gruppe charakterisiert durch die allgemeinen Formel (2) die relative Lösungsviskosität dieses in Komponente A eingesetzten Copolymersim Bereich von 1,23 - 1,27 liegt und
      (viii) dadurch gekennzeichnet, dass bei Einsatz von Homo- oder Copolycarbonaten basierend auf mindestens einer Monomereinheit ausgewählt aus der Gruppe charakterisiert durch die allgemeine Formel (2), welche keine von Bis-(4-hydroxyphenyl)-Verbindungen abgeleitete Monomereinheiten, die über die 1,1'-Stellung eines cyclischen, gegebenenfalls mit Heteroatomen substituierten Kohlenwasserstoffs verbrückt sind, enthalten, die relative Lösungsviskosität dieses in Komponente A eingesetzten Homo- oder Copolymers im Bereich von 1,20 - 1,28 liegt.
19.) Zusammensetzungen gemäß Ausführungsform 18, dadurch gekennzeichnet, dass in Komponente A) als von einer Bis-(4-hydroxyphenyl)-Verbindung abgeleitete Monomereinheit, die über die 1,1'-Stellung eines cyclischen, gegebenenfalls mit Heteroatomen substituierten Kohlenwasserstoffs verbrückt ist, eine Verbindung der allgemeinen Formel (1a) zum Einsatz kommt.
20.) Zusammensetzungen gemäß Ausführungsform 19, dadurch gekennzeichnet, dass die von Bis-(4-hydroxyphenyl)-Verbindungen abgeleitete Monomereinheit, die über die 1,1'-Stellung eines cyclischen, gegebenenfalls mit Heteroatomen substituierten Kohlenwasserstoffs verbrückt ist, von 1,1-Bis-(4-hydroxyphenyl)-3,3',5-trimethylcyclohexan abgeleitet ist.
21.) Zusammensetzungen gemäß einer der vorherigen Ausführungsformen, dadurch gekennzeichnet, dass als Entformungsmittel Pentaerythrittetrastearat, als Stabilisator mindestens ein Vertreter ausgewählt aus der Gruppe bestehend aus Octadecyl 3-(3,5-di-tert-butyl-4-hydroxyphenyl)propionat und Tris(2,4-di-tert-butylphenyl)phosphit sowie optional eine Brönstedt-Säure enthalten ist und die Zusammensetzungen frei sind von weiteren Polymeradditiven.
22.) Verwendung von Zusammensetzungen einer der Ausführungsformen 1 bis 21 zur Herstellung eines Bauteils enthaltend einen Kunststoff-Träger und eine mehrlagige Metallschicht.
23.) Formkörper hergestellt aus einer der Zusammensetzungen gemäß Ausführungsform 1 bis 21.

### Definitionen

C₁-C₄-Alkyl steht im Rahmen der Erfindung beispielsweise für Methyl, Ethyl, n-Propyl, iso-Propyl, n-Butyl, sec.-Butyl, tert.-Butyl, C₁-C₆-Alkyl darüber hinaus beispielsweise für n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl, C₁-C₁₀-Alkyl darüber hinaus beispielsweise für n-Heptyl und n-Octyl, Pinakyl, Adamantyl, die isomeren Menthyle, n-Nonyl, n-Decyl, C₁-C₃₄-Alkyl darüber hinaus beispielsweise für n-Dodecyl, n-Tridecyl, n-Tetradecyl, n-Hexadecyl oder n-Octadecyl. Gleiches gilt für den entsprechenden Alkylrest beispielsweise in Aralkyl- bzw. Alkylaryl-, Alkylphenyl- oder Alkylcarbonylresten. Alkylenreste in den entsprechenden Hydroxyalkyl- oder Aralkyl- bzw. Alkylarylresten stehen beispielsweise für die den vorangehenden Alkylresten entsprechenden Alkylenreste.

Aryl steht für einen carbocyclischen aromatischen Rest mit 6 bis 34 Gerüstkohlenstoffatomen. Gleiches gilt für den aromatischen Teil eines Arylalkylrestes, auch Aralkylrest genannt, sowie für Arylbestandteile komplexerer Gruppen, wie z.B. Arylcarbonylresten.

Beispiele für C₆-C₃₄-Aryl sind Phenyl, o-, p-, m-Tolyl, Naphthyl, Phenanthrenyl, Anthracenyl oder Fluorenyl.

### Komponente A

Die erfindungsgemäße Zusammensetzung enthält als Komponente A mindestens eine Komponente ausgewählt aus der Gruppe bestehend aus Homo- und Copolycarbonaten enthaltend eine oder mehrere, bevorzugt genau eine, von Bis-(4-hydroxyphenyl)-Verbindungen abgeleitete Monomereinheiten, die über die 1,1'-Stellung eines cyclischen, gegebenenfalls mit Heteroatomen substituierten Kohlenwasserstoffs verbrückt sind, bevorzugt solche über die 1,1'-Stellung eines cyclischen, Kohlenwasserstoffs verbrückte Monomereinheiten der allgemeinen Formeln (1a), (1b), (1c),(1d) und optional zusätzlich Monomereinheiten der allgemeinen Formel (2), 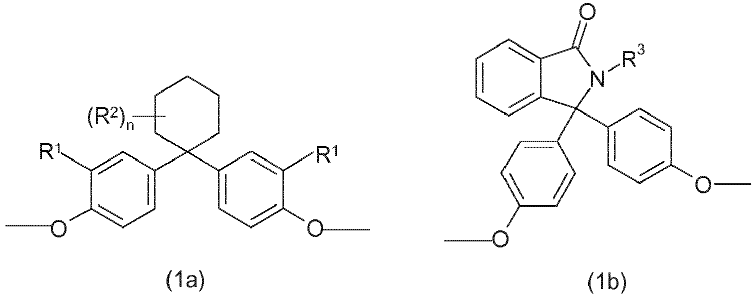 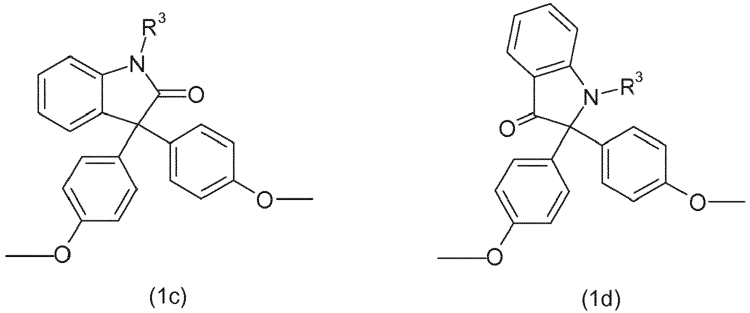 in denen
R¹ für Wasserstoff oder C₁-C₄-Alkyl, bevorzugt für Wasserstoff,
R² für C₁-C₄-Alkyl, bevorzugt Methyl,
n für 0, 1, 2 oder 3, bevorzugt 3 steht, und
R³ für C₁-C₄-Alkyl, Aralkyl oder Aryl, bevorzugt für Methyl oder Phenyl, ganz besonders bevorzugt für Phenyl, steht, 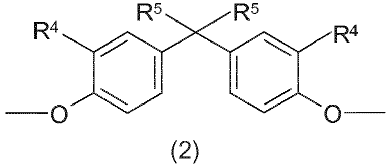
in der
R⁴ für H, lineare oder verzweigte C₁-C₁₀ Alkyl, bevorzugt lineare oder verzweigte C₁-C₆ Alkyl, besonders bevorzugt für lineare oder verzweigte C₁-C₄ Alkyl, ganz besonders bevorzugt für H oder C₁-Alkyl (Methyl) steht, und
R⁵ für lineare oder verzweigte C₁-C₁₀ Alkyl, bevorzugt lineare oder verzweigte C₁-C₆ Alkyl, besonders bevorzugt für lineare oder verzweigte C₁-C₄ Alkyl, ganz besonders bevorzugt für C₁-Alkyl (Methyl) steht.

Es können auch Mischungen verschiedener Homo- und/oder Copolycarbonate aus der oben genannten Gruppe als Komponente A zum Einsatz kommen.

Zusätzlich können in der Komponente A Homo-und Copolycarbonate enthaltend ausschließlich Monomereinheiten der allgemeinen Formel (2) enthaltend sein. Dabei handelt es sich bevorzugt um Homopolycarbonat auf Basis von Bisphenol-A.

Die Monomereinheit(en) der allgemeinen Formel (1a) führt man über ein oder mehrere entsprechenden Diphenole der allgemeinen Formel (1a') ein: 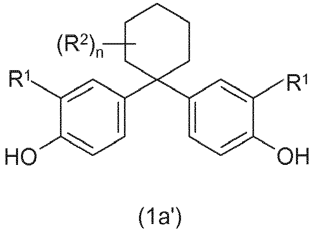 in der
R¹ für Wasserstoff oder C₁-C₄-Alkyl, bevorzugt Wasserstoff,
R² für C₁-C₄-Alkyl, bevorzugt Methyl, und
n für 0, 1, 2 oder 3, bevorzugt 3 stehen.

Die erfindungsgemäß einzusetzenden Diphenole der Formeln (1a') und ihr Einsatz in Homopolycarbonaten sind beispielsweise aus DE 3918406 bekannt.

Besonders bevorzugt ist 1,1-Bis-(4-hydroxyphenyl)-3,3,5-trimethylcyclohexan (Bisphenol TMC) mit der Formel (1a"):

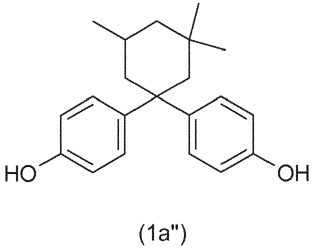

Die Monomereinheit(en) der allgemeinen Formel (1b), (1c) und (1d) führt man über ein oder mehrere entsprechenden Diphenole der allgemeinen Formeln (1b'), (1c') und (1d') ein: 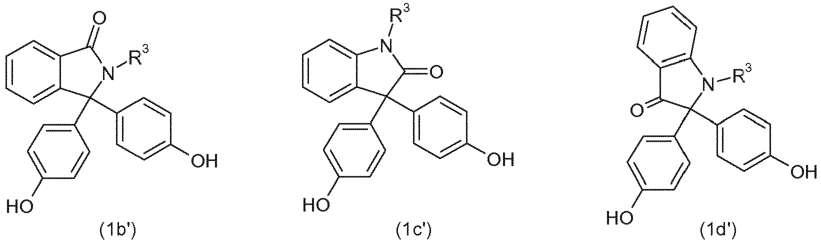 in denen R³ für C₁-C₄-Alkyl, Aralkyl oder Aryl, bevorzugt für Methyl oder Phenyl, ganz besonders bevorzugt für Phenyl, steht.

Die Monomereinheit(en) der allgemeinen Formel (2) führt man über ein oder mehrere entsprechende Diphenole der allgemeinen Formel (2a) ein: 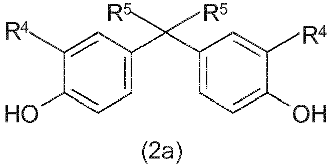
in der R⁴ für H, lineare oder verzweigte C₁-C₁₀-Alkyl, bevorzugt lineare oder verzweigte C₁-C₆ -Alkyl, besonders bevorzugt für lineare oder verzweigte C₁-C₄-Alkyl, ganz besonders bevorzugt für H oder C₁-Alkyl (Methyl) steht und
in der R⁵ für lineare oder verzweigte C₁-C₁₀-Alkyl, bevorzugt lineare oder verzweigte C₁-C₆-Alkyl, besonders bevorzugt für lineare oder verzweigte C₁-C₄-Alkyl, ganz besonders bevorzugt für C₁-Alkyl (Methyl) steht.

Hierbei ist insbesondere das Diphenol (2b) ganz besonders bevorzugt.

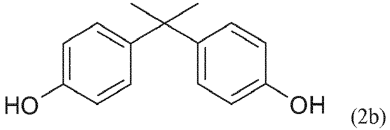

Neben ein oder mehreren Monomereinheiten der Formeln (1a), (1b), (1c), (1d) und (2) können in den Polycarbonaten der Komponente A auch ein oder mehrere, von den Monomereinheiten gemäß der Formeln (1a), (1b), (1c), (1d) und (2) verschiedene Monomereinheit(en) der Formel (3) enthalten sein: 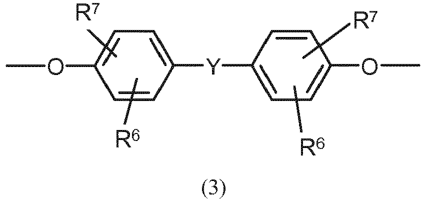 in der
R⁶ und R⁷ unabhängig voneinander für H, C₁-C₁₈-Alkyl-, C₁-C₁₈-Alkoxy, Halogen wie Cl oder Br oder für jeweils gegebenenfalls substituiertes Aryl oder Aralkyl, bevorzugt für H oder C₁-C₁₂-Alkyl, besonders bevorzugt für H oder C₁-C₈-Alkyl und ganz besonders bevorzugt für H oder Methyl stehen, und
Y für eine Einfachbindung, -SO₂-, -CO-, -O-, -S-, C₁-C₆-Alkylen oder C₂-C₅-Alkyliden, ferner für C₆-C₁₂-Arylen, welches gegebenenfalls mit weiteren Heteroatome enthaltenden aromatischen Ringen kondensiert sein kann, steht.

Die Monomereinheit(en) der allgemeinen Formel (3) führt man über ein oder mehrere entsprechenden Diphenole der allgemeinen Formel (3a) ein: 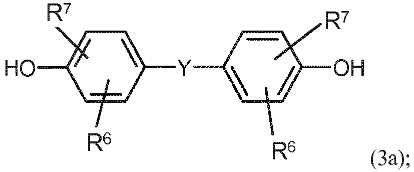 wobei R⁶, R⁷ und Y jeweils die bereits im Zusammenhang mit der Formel (3) erwähnte Bedeutung haben.

Beispielhaft werden für die Diphenole der Formel (3a), die neben den Diphenolen der Formel (1a'), (1b'), (1c'), (1d') und (2) eingesetzt werden können, Hydrochinon, Resorcin, Dihydroxybiphenyle, von Formel (2a) verschiedene Bis-(hydroxyphenyl)-alkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren kemalkylierte und kernhalogenierte Verbindungen und auch α,ω- Bis-(hydroxyphenyl)-polysiloxane genannt.

Die zur Herstellung der Polycarbonate gemäß Komponente A zum Einsatz kommenden Diphenole sind literaturbekannt und nach literaturbekannten Verfahren herstellbar (siehe z.B. H. J. Buysch et al., Ullmann's Encyclopedia of Industrial Chemistry, VCH, New York 1991, 5. Ed., Vol. 19, p. 348).

Die Copolycarbonatkomponenten in Komponente A können als block- und statistisches Copolycarbonat vorliegen. Besonders bevorzugt sind statistische Copolycarbonate.

Bevorzugte Herstellungsweisen der Homo- oder Copolycarbonate (im Folgenden zusammen auch bezeichnet als (Co)Polycarbonate), die in der erfindungsgemäßen Zusammensetzung als Komponente A bevorzugt eingesetzt werden, sind das Phasengrenzflächenverfahren und das Schmelzeumesterungsverfahren.

Zur Gewinnung hochmolekularer (Co)Polycarbonate nach dem Phasengrenzflächenverfahren werden im Zweiphasengemisch die Alkalisalze von Diphenolen mit Phosgen umgesetzt. Das Molekulargewicht kann durch die Menge an Monophenolen, die als Kettenabbrecher wirken, wie z. B. Phenol, tert.-Butylphenol oder Cumylphenol gesteuert werden, besonders bevorzugt Phenol, tert.-Butylphenol. Bei diesen Umsetzungen entstehen praktisch ausschließlich lineare Polymere. Dies kann durch Endgruppenanalyse nachgewiesen werden. Durch gezielte Verwendung von sogenannten Verzweigern, in der Regel mehrfach hydroxylierte Verbindungen, werden dabei auch verzweigte Polycarbonate erhalten.

Zur Gewinnung hochmolekularer (Co)Polycarbonate nach dem Schmelzeumesterungsverfahren werden Diphenole mit Kohlensäurediestern, meist Diphenylcarbonat, in Anwesenheit von Katalysatoren, wie Alkalisalzen, Ammonium- oder Phosphoniumverbindungen, in der Schmelze umgesetzt.

Das Schmelzumesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie der DE-C 10 31 512 beschrieben.

Die relative Lösungsviskosität der in der erfindungsgemäßen Zusammensetzung eingesetzten Komponente A, liegt bevorzugt im Bereich von 1,20 - 1,28. Die relative Lösungsviskosität der Komponente A wird im Rahmen der vorliegenden Anmeldung nach DIN 51562 in der Version von 1999 in Methylenchlorid bestimmt.

Kommt als Komponente A eine Mischung verschiedener (Co)Polycarbonate zum Einsatz, so liegt die relative Lösungsviskosität dieser als Komponente A eingesetzten Mischung, bevorzugt in diesem Bereich von 1,20 - 1,28.

Bei Einsatz von Copolycarbonaten basierend auf mindestens einer Monomereinheit ausgewählt aus der Gruppe charakterisiert durch die allgemeinen Formel (1a) und mindestens einer Monomereinheit ausgewählt aus der Gruppe charakterisiert durch die allgemeinen Formel (2) liegt die relative Lösungsviskosität dieses in Komponente A eingesetzten Copolymers bevorzugt im Bereich von 1,23 - 1,27.

Bei Einsatz von Copolycarbonaten basierend auf mindestens einer Monomereinheit ausgewählt aus einer der Gruppen (1b), (1c), (1d) und mindestens einer Monomereinheit ausgewählt aus der Gruppe charakterisiert durch die allgemeine Formel (2) liegt die relative Lösungsviskosität dieses in Komponente A eingesetzten Copolymers bevorzugt im Bereich von 1,20 - 1,24.

Bei Einsatz von Homo- oder Copolycarbonaten basierend auf mindestens einer Monomereinheit ausgewählt aus der Gruppe charakterisiert durch die allgemeine Formel (2), welche keine von Bis-(4-hydroxyphenyl)-Verbindungen abgeleitete Monomereinheiten, die über die 1,1'-Stellung eines cyclischen, gegebenenfalls mit Heteroatomen substituierten Kohlenwasserstoffs verbrückt sind, enthalten, liegt die relative Lösungsviskosität dieses in Komponente A eingesetzten Homo- oder Copolymers bevorzugt im Bereich von 1,20 - 1,28.

### Komponente B

Die Komponente B umfasst ein oder mehrere Pfropfpolymerisate von
B.1 10 bis 70 Gew.-%, vorzugsweise 15 bis 60 Gew.-%, besonders bevorzugt 20 bis 55 Gew.-% mindestens eines Vinylmonomeren auf
B.2 30 bis 90 Gew.-%, vorzugsweise 40 bis 85 Gew.-%, besonders bevorzugt 45 bis 80 Gew.-% mindestens einer kautschukelastischen partikulären Pfropfgrundlage ausgewählt aus der Gruppe bestehend aus Dienkautschuken und EPDM-Kautschuken (d.h. solchen auf Basis Ethylen/Propylen und Dien).

Die Pfropfgrundlage B.2 hat im Allgemeinen eine mittlere Teilchengröße (dso-Wert) von 0,05 bis 1 µm, vorzugsweise 0,1 bis 0,7 µm, besonders bevorzugt 0,2 bis 0,5 µm.

In bevorzugter Ausführungsform beträgt der Anteil der Kautschukpartikel in der Pfropfgrundlage B.2 mit einem Durchmesser von <200 nm mindestens 10 Gew.-%, bevorzugt mindestens 20 Gew.- %.

Monomere B.1 sind vorzugsweise Gemische aus
B.1.1 50 bis 99 Gew.-%, bevorzugt 65 bis 85 Gew.-%, bevorzugt 70 bis 80 Gew.-%, jeweils bezogen auf die Gesamtheit der Monomere der Pfropfhülle B.1, Vinylaromaten und/oder kernsubstituierten Vinylaromaten (wie Styrol, α-Methylstyrol, p-Methylstyrol, p-Chlorstyrol) und/oder (Meth)Acrylsäure-(C₁-C₈)-Alkylester, wie Methylmethacrylat, Ethylmethacrylat und Butylacrylat, und
B.1.2 1 bis 50 Gew.-%, bevorzugt 15 bis 35 Gew.-%, besonders bevorzugt 20 bis 30 Gew.-%, jeweils bezogen auf die Gesamtheit der Monomere der Pfropfhülle B.1, Vinylcyanide (ungesättigte Nitrile wie Acrylnitril und Methacrylnitril) und/oder (Meth)Acrylsäure-(C₁-C₈)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Monomere B.1.1 sind ausgewählt aus mindestens einem der Monomere Styrol, α-Methylstyrol und Methylmethacrylat. Bevorzugte Monomere B.1.2 sind ausgewählt aus mindestens einem der Monomere Acrylnitril, Maleinsäureanhydrid und Methylmethacrylat. Besonders bevorzugte Monomere sind B.1.1 Styrol und B.1.2 Acrylnitril.

Bevorzugte Pfropfgrundlagen B.2 sind Dienkautschuke (beispielsweise auf Basis Butadien und/oder Isopren) oder Gemische von Dienkautschuken. Unter Dienkautschuken im erfindungsgemäßen Sinne sind auch Dienmonomer-enthaltende Copolymerisate enthaltend copolymerisierbare Monomere (z.B. gemäß B.1.1 und B.1.2) zu verstehen. Es kann sich hierbei sowohl um statistische Copolymerisate als auch Copolymerisate mit Block-Struktur handeln.

Die Pfropfgrundlagen B.2 weisen bevorzugt eine Glasübergangstemperatur von < 0°C, besonders bevorzugt < -40°C, ganz besonders bevorzugt < -70°C auf.

Besonders bevorzugte Polymerisate B sind beispielsweise ABS- Polymerisate, insbesondere solche hergestellt im Emulsionspolymerisationsverfahren, wie sie z.B. in Ullmanns, Enzyklopädie der Technischen Chemie, Bd. 19 (1980), S. 280 ff. beschrieben sind.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere B.1 in Gegenwart der Pfropfgrundlage B.2 gewonnen werden und bei der Aufarbeitung mit anfallen. Diese Produkte können also auch freies, das heißt nicht kovalent an die Pfropfgrundlage B.2 gebundenes Vinyl(co)polymerisat aus B.1.1 und B.1.2 enthalten.

Der Gelanteil der Pfropfpolymerisate B, gemessen in Aceton als Lösungsmittel, beträgt vorzugsweise mindestens 70 Gew.-%, besonders bevorzugt mindestens 75 Gew.-%, ganz besonders bevorzugt mindestens 80 Gew.-%. Dabei stellt der gemäß y = 100% - Gelanteil berechnete Anteil y ein Maß für das freie, das heißt nicht kovalent an die Pfropfgrundlage gebundene Vinyl(co)polymerisat aus B.1.1 und B.1.2 dar.

Vorzugsweise weist das Pfropfpolymerisat aus den Komponenten B.1 und B.2 eine Kern-Schale-Struktur auf, wobei die Komponente B.1 die Schale bildet (auch als Hülle bezeichnet) und die Komponente B.2 den Kern ausbildet (siehe bspw. Ullmann's Encyclopedia of Industrial Chemistry, VCH-Verlag, Vol. A21, 1992, Seite 635 und Seite 656.

Die Pfropfcopolymerisate B werden durch radikalische Polymerisation hergestellt.

Der Gelgehalt der Pfropfpolymerisate B wird bei 25°C in einem geeigneten Lösungsmittel, bevorzugt in Aceton, bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er wird mittels Ultrazentrifugenmessung (W. Scholtan, H. Lange, Kolloid, Z. und Z. Polymere 250 (1972), 782-796) bestimmt. Mit dieser Methode wird im Rahmen der vorliegenden Anmeldung die Kautschukpartikelgrößenverteilung ermittelt. Aus dieser kann auch der Anteil der Kautschukpartikel in der Pfropfgrundlage B.2 mit einem Durchmesser von <200 nm bestimmt werden.

Die Glasübergangstemperatur wird im Rahmen der vorliegenden Anmeldung mittels dynamischer Differenz-Thermoanalyse (DSC) gemäß der Norm DIN EN 61006 bei einer Heizrate von 10 K/min mit Definition der T_{g} als Mittelpunkttemperatur (Tangentenmethode) bestimmt.

### Komponente C

Die Zusammensetzung kann als Komponente C ein oder mehrere weitere Additive enthalten, bevorzugt ausgewählt aus der Gruppe bestehend aus Flammschutzmitteln (z.B. organische Phosphor- oder Halogenverbindungen, insbesondere Bisphenol-A basierendes Oligophosphat), Antidrippingmitteln (beispielsweise Verbindungen der Substanzklassen der fluorierten Polyolefine, der Silikone sowie Aramidfasem), Flammschutzsynergisten (beispielsweise nanoskalige Metalloxide), Rauchinhibitoren (beispielsweise Zinkborat), Gleit- und Entformungsmitteln (beispielsweise Pentaerythrittetrastearat), Nukleiermitteln, Antistatika, Leitfähigkeitsadditiven, Stabilisatoren (z.B. Hydrolyse-, Wärmealterungs- und UV-Stabilisatoren sowie Umesterungsinhibitoren und Säure-/Basenquenchern), Fließfähigkeitspromotoren, Verträglichkeitsvermittlern, weiteren von Komponente B verschiedene Schlagzähigkeitsmodifikatoren (sowohl mit als auch ohne Kern-Schale-Struktur), weitere polymeren Bestandteilen (beispielsweise funktionelle Blendpartnern), Füll- und Verstärkungsstoffen (beispielsweise Karbonfasern, Talk, Glimmer, Kaolin, CaCO₃) sowie Farbstoffen und Pigmenten (beispielsweise Titandioxid oder Eisenoxid).

In bevorzugter Ausführungsform ist die Zusammensetzung frei von Flammschutzmitteln, Antidrippingmitteln, Flammschutzsynergisten und Rauchinhibitoren.

In ebenfalls bevorzugter Ausführungsform ist die Zusammensetzung frei von Füll- und Verstärkungsstoffen.

In besonders bevorzugter Ausführungsform ist die Zusammensetzung frei von Flammschutzmitteln, Antidrippingmitteln, Flammschutzsynergisten, Rauchinhibitoren sowie Füll- und Verstärkungsstoffen.

In bevorzugter Ausführungsform enthält die Zusammensetzung mindestens ein Polymeradditiv ausgewählt aus der Gruppe bestehend aus Gleit- und Entformungsmitteln, Stabilisatoren, Fließfähigkeitspromotoren, Verträglichkeitsvermittlern, weiteren von Komponente B verschiedenen Schlagzähigkeitsmodifikatoren, weiteren polymeren Bestandteilen, Farbstoffen und Pigmenten.

In bevorzugter Ausführungsform enthält die Komponente C kein freies (d.h. nicht chemisch an eine Kautschukgrundlage gebundenes) Vinyl(co)polymerisat.

In besonders bevorzugter Ausführungsform enthält die Zusammensetzung mindestens ein Polymeradditiv ausgewählt aus der Gruppe bestehend aus Gleit- und Entformungsmitteln, Stabilisatoren, Fließfähigkeitspromotoren, Verträglichkeitsvermittlern, weiteren von Komponente B verschiedenen Schlagzähigkeitsmodifikatoren, weiteren polymeren Bestandteilen, Farbstoffen und Pigmenten und ist frei von weiteren Polymeradditiven.

In bevorzugter Ausführungsform enthält die Zusammensetzung mindestens ein Polymeradditiv ausgewählt aus der Gruppe bestehend aus Gleit-/Entformungsmitteln und Stabilisatoren.

In besonders bevorzugter Ausführungsform enthält die Zusammensetzung mindestens ein Polymeradditiv ausgewählt aus der Gruppe bestehend aus Gleit-/Entformungsmitteln und Stabilisatoren und ist frei von weiteren Polymeradditiven.

In bevorzugter Ausführungsform enthält die Zusammensetzung als Entformungsmittel Pentaerythrittetrastearat.

In bevorzugter Ausführungsform enthält die Zusammensetzung als Stabilisator mindestens einen Vertreter ausgewählt aus der Gruppe bestehend aus sterisch gehinderten Phenolen, organischen Phosphiten, Schwefel-basierten Co-Stabilisatoren und organischen sowie anorganischen Brönstedt-Säuren.

In besonders bevorzugter Ausführungsform enthält die Zusammensetzung als Stabilisator mindestens einen Vertreter ausgewählt aus der Gruppe bestehend aus Octadecyl 3-(3,5-di-tert-butyl-4-hydroxyphenyl)propionat und Tris(2,4-di-tert-butylphenyl)phosphit.

In speziell bevorzugter Ausführungsform enthält die Zusammensetzung als Stabilisator eine Kombination aus Octadecyl 3-(3,5-di-tert-butyl-4-hydroxyphenyl)propionat und Tris(2,4-di-tert-butylphenyl)phosphit.

Besonders bevorzugte Zusammensetzungen enthalten als Entformungsmittel Pentaerythrittetrastearat, als Stabilisator mindestens einen Vertreter ausgewählt aus der Gruppe bestehend aus Octadecyl 3-(3,5-di-tert-butyl-4-hydroxyphenyl)propionat und Tris(2,4-di-tert-butylphenyl)phosphit sowie optional eine Brönstedt-Säure und sind frei von weiteren Polymeradditiven.

Weiter bevorzugte Zusammensetzungen enthalten als Entformungsmittel Pentaerythrittetrastearat, als Stabilisator eine Kombination aus Octadecyl 3-(3,5-di-tert-butyl-4-hydroxyphenyl)propionat und Tris(2,4-di-tert-butylphenyl)phosphit, optional eine Brönstedt-Säure und sind frei von weiteren Polymeradditiven.

### Herstellung der Formmassen

Die erfindungsgemäßen thermoplastischen Formmassen können beispielsweise hergestellt werden, indem man die jeweiligen Bestandteile in bekannter Weise vermischt und bei Temperaturen von 220°C bis 350°C, bevorzugt bei 250 bis 330°C, besonders bevorzugt bei 260 bis 320°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

In einer bevorzugten Ausführungsform erfolgt die Herstellung der erfindungsgemäßen Zusammensetzungen in einem Doppelwellenextruder.

### Verwendung der Formmassen zur Herstellung galvanisierter Formteile

Die Herstellung der galvanisierten Formteile kann beispielsweise über ein Verfahren erfolgen, dadurch charakterisiert, dass
(i) in einem ersten Schritt ein Kunststoffträger aus einer erfindungsgemäßen Polycarbonat-Zusammensetzung wie oben beschrieben geformt wird, wobei bevorzugt ein Extrusions-, Blasform-, Thermoform- oder Spritzgussverfahren, besonders bevorzugt ein Spritzgussverfahren zur Formgebung bei der Herstellung dieses Trägers zum Einsatz kommt,
(ii) und in einem zweiten Verfahrensschritt dieser Kunststoffträger in einem für AcrylnitrilButadien-Styrol (ABS)-Copolymere und deren Blends mit Polycarbonat etablierten Galvanisierungsverfahren galvanisiert wird.

Der Verfahrensschritt (ii) der Galvanisierung umfasst dabei im Wesentlichen die folgenden Einzelschritte:
(ii-1) das Beizen des im Verfahrensschritt (i) hergestellten Kunststoffträgers, beispielsweise und bevorzugt mit Chromschwefelsäure, wobei in bevorzugter Ausführungsform in diesem Verfahrensschritt ein Benetzungshilfsmittel (z.B. Udique® Wetting Agent BL2030 des Herstellers Entone) als Prozesshilfsmittel zum Einsatz kommt, welches die Oberflächenspannung zwischen Kunststoffträger und Beizmittel reduziert, gefolgt von einer chemischen Reduktion der Chromschwefelsäure durch ein Reduktionsmittel wie beispielsweise Eisen-(II)-chlorid und nachfolgendem gründlichen Spülen mit Wasser zur effektiven Entfernung von Chromresten,
(ii-2) die Aktivierung des so vorbehandelten Kunststoffträgers durch Adsorption eines Palladium-Kolloids, bevorzugt ein Palladium-Kolloid mit einer Zinnchlorid Hülle, auf der Trägeroberfläche, (ii-3) die Generierung von Palladium-Keimen zur späteren Abscheidung von chemisch Nickel oder chemisch Kupfer auf der Kunststoffträgeroberfläche durch Zerstörung der Hülle des adsorbierten Palladium-Kolloids durch Behandlung mit einer verdünnten Brönstedt-Säure,
(ii-4) Abscheidung von chemisch Nickel oder chemisch Kupfer auf dem so vorbehandelten Kunststoffträger aus einer Nickel-(II)- oder einer Kupfer-(II)-Salzlösung unter Verwendung eines chemischen Reduktionsmittels, wie beispielsweise ein Dihydrogenphosphitsalz,
(ii-5) elektrochemische Aufbringung einer Kupfermetallschicht,
(ii-6) elektrochemische Aufbringung einer Nickelmetallschicht und
(ii-7) elektrochemische Aufbringung einer weiteren Metallschicht mit einer hohen Beständigkeit gegen Umwelteinflüsse, beispielsweise und bevorzugt einer Chrommetallschicht.

### Beispiele

### Komponente A1:

Lineares Polycarbonat auf Basis Bisphenol-A mit einem gewichtsgemittelten Molekulargewicht M_{W} von 25.000 g/mol (bestimmt durch GPC gegen einen BPA-PC-Standard) und einer relativen Lösungsviskosität von 1,255.

### Komponente A2:

Lineares Polycarbonat auf Basis Bisphenol-A mit einem gewichtsgemittelten Molekulargewicht M_{W} von 18.000 g/mol (bestimmt durch GPC gegen einen BPA-PC-Standard) und einer relativen Lösungsviskosität von 1,20.

### Komponente A3:

Lineares Polycarbonat auf Basis einer Mischung aus 89 Gew.-% Bisphenol-A und 11 Gew.-% TMC-Bisphenol (1,1'-Bis-(4-hydroxyphenyl)-3,3',5-trimethylcyclohexan), mit einem gewichtsgemittelten Molekulargewicht Mw von 25.000 g/mol (bestimmt durch GPC gegen einen BPA-PC-Standard) und einer relativen Lösungsviskosität von 1,255.

### Komponente A4:

Lineares Polycarbonat auf Basis einer Mischung aus 55 Gew.-% Bisphenol-A und 45 Gew.-% TMC-Bisphenol (1,1'-Bis-(4-hydroxyphenyl)-3,3',5-trimethylcyclohexan), mit einem gewichtsgemittelten Molekulargewicht M_{W} von 28.000 g/mol (bestimmt durch GPC gegen einen BPA-PC-Standard) und einer relativen Lösungsviskosität von 1,255.

### Komponente A5:

Lineares Polycarbonat auf Basis einer Mischung aus 32 Gew.-% Bisphenol-A und 68 Gew.-% TMC-Bisphenol (1,1'-Bis-(4-hydroxyphenyl)-3,3',5-trimethylcyclohexan), mit einem gewichtsgemittelten Molekulargewicht M_{W} von 29.000 g/mol (bestimmt durch GPC gegen einen BPA-PC-Standard) und einer relativen Lösungsviskosität von 1,255.

### Komponente A6:

Lineares Polycarbonat auf Basis einer Mischung aus 64 Gew.-% Bisphenol-A und 36 Gew.-% 2-Phenyl-3,3'-Bis-(4-hydroxyphenyl)-phthalimid (PPPBP), mit einem gewichtsgemittelten Molekulargewicht M_{W} von 22.500 g/mol (bestimmt durch GPC gegen einen BPA-PC-Standard) und einer relativen Lösungsviskosität von 1,215.

### Komponente B-1:

ABS-Pfropfpolymerisat auf Basis eines Polybutadienkautschuks als Pfropfgrundlage mit einem Acrylnitril : Butadien : Styrol - Verhältnis von 13 : 50 : 37 Gew.-% und mit einem Gelgehalt, gemessen in Aceton, von 80 Gew.-%, hergestellt in Emulsionspolymerisation. Die mittlere Teilchengröße dso der Kautschukgrundlage beträgt 0,4µm und 30 Gew.-% der Kautschukpartikel, welche als Pfropfgrundlage zur Herstellung dieses ABS-Pfropfpolymerisats verwendet wurden, weisen einen Teilchendurchmesser von kleiner als 200 nm, jeweils gemessen durch Ultrazentrifugation, auf.

### Komponente B-2:

ABS-Pfropfpolymerisat auf Basis eines Polybutadienkautschuks als Pfropfgrundlage mit einem Acrylnitril : Butadien : Styrol - Verhältnis von 11 : 59 : 30 Gew.-% und mit einem Gelgehalt, gemessen in Aceton, von 90 Gew.-%, hergestellt in Emulsionspolymerisation. Die mittlere Teilchengröße d₅₀ der Kautschukgrundlage beträgt 0,4 µm und 0 Gew.-% der Kautschukpartikel, welche als Pfropfgrundlage zur Herstellung dieses ABS-Pfropfpolymerisats verwendet wurden, weisen einen Teilchendurchmesser von kleiner als 200 nm, jeweils gemessen durch Ultrazentrifugation, auf, d.h. alle Kautschukpartikel sind größer als 200 nm.

### Komponente C-1:

SAN-Copolymerisat mit einem Acrylnitrilgehalt von 23 Gew.-% und einem gewichtsgemittelten Molekulargewicht von 130.000 g/mol (bestimmt durch GPC gegen einen Polystyrol-Standard).
**Komponente D-1:** Pentaerythrittetrastearat
**Komponente D-2:** Phosphitstabilisator Irgafos 168 (BASF, Ludwigshafen, Deutschland)
**Komponente D-3:** Phenolisches Antioxidanz Irganox 1076 (BASF, Ludwigshafen, Deutschland)
**Komponente D-4:** Calciumdihydrogenphosphat

### Herstellung und Prüfung der erfindungsgemäßen Formmassen

Das Mischen der Komponenten erfolgte auf einem Zweiwellenextruder ZSK-25 der Fa. Coperion, Werner & Pfleiderer bei einer Massetemperatur von 270 bis 300°C, einem Durchsatz von 20 kg/h und einer Drehzahl von 220 bis 300 min⁻¹. Die am Düsenaustritt gemessenen Temperaturen der Schmelze der Zusammensetzungen betrugen 270 bis 350°C - abhängig von der Viskosität der Zusammensetzung, wobei mit zunehmender Viskosität die Schmelzetemperatur zunahm. Die Formkörper wurden bei einer Massetemperatur von 280°C und einer Werkzeugtemperatur von 80°C auf einer Spritzgießmaschine vom Typ Arburg 270 E hergestellt.

Die IZOD-Kerbschlagzähigkeiten aₖ wurden bei Raumtemperatur (23°C) gemäß ISO 180/1A (Version von 1982) an Prüfstäben der Dimensionen 80 mm x 10 mm x 4 mm ermittelt.

Die Wärmeformbeständigkeiten gemäß der Methoden Vicat B/120 und HDT/A wurden beide ebenfalls an Prüfstäben der Dimensionen 80 mm x 10 mm x 4 mm gemäß ISO 306 (50 N; 120°C/h) (Version von 2013) bzw. ISO 75 (1,80 MPa) (Version von 2013) ermittelt.

Die Schmelzevolumenflußraten MVR wurden gemäß ISO 1133 (Version von 2012) bei einer Temperatur von 320°C und mit einer Stempellast von 1,2 kg ermittelt.

Die Schmelzeviskositäten wurden gemäß ISO 11443 (Version von 2014) bei 260 bzw. 300 °C, in beiden Fällen bei einer Scherrate von 1000 s⁻¹, ermittelt.

Die Galvanisierbarkeit wurde anhand der Vollständigkeit der in einem für ABS+PC-Zusammensetzungen üblichen Galvanisierungsprozess erzielten Metallbelegung und dem Auftreten von blasenförmigen Metallablösungen direkt nach Durchlaufen des Galvanisierungsprozesses bewertet. Die Bewertung "i.O." bezeichnet dabei ein Ergebnis visuell vollständiger Metallbelegung auf der gesamten Formteiloberfläche ohne jegliche Belegungslücken und ohne jegliche Blasenbildung. Die Überprüfung der Galvanisierbarkeit erfolgte an Platten der Dimensionen 150 mm x 100 mm x 2 mm, die im Spritzgießverfahren unter den oben genannten Bedingungen hergestellt wurden.

Die Galvanisierung erfolgte wie folgt: Der im Spritzguss hergestellte Kunststoffträger wurde zunächst mit Chromschwefelsäure (390 g/Liter Chromsäure und 390 g/Liter konz. Schwefelsäure) für 18 Minuten bei 68°C gebeizt. Danach wurde mit Wasser gespült. Anschließend wurden verbleibende Chromschwefelsäurereste mit Adhemax® Neutralizer CR für eine Minute bei 35°C reduziert, das so behandelte Formteil erneut mit Wasser gespült und danach mit Neolink® H (Hersteller Firma Atotech) als Conditioner für 3 Minuten bei 35°C behandelt. Die Aktivierung des so vorbehandelten Kunststoffträgers erfolgte durch Adsorption eines Palladium-Kolloids mit einer Zinnchlorid-Hülle (Adhemax® Aktivator SF, Hersteller Firma Atotech). Die Aktivierung erfolgte bei 35°C und einer Aktivierungszeit von 4 min. Die Konzentration an Palladium in der wässrigen Aktivierungslösung betrug 50 mg Pd/Liter. Das Kolloid wurde durch nachfolgende Behandlung mit Adhemax® Beschleuniger ACC1 (Hersteller Firma Atotech) für 4 Minuten bei 40°C zerstört, wodurch Palladiumkeime ausgebildet wurden. Es folgte eine Abscheidung von chemisch Nickel aus Adhemax® LSF für 9 Minuten bei 40°C. Anschließend wurde das Bauteil für 30 Sekunden bei Raumtemperatur in Schwefelsäure getaucht. Danach wurde zunächst eine Kupfermetallschicht, gefolgt von einer Nickelmetallschicht, wiederum gefolgt von einer Chrommetallschicht elektrochemisch aufgebracht.

Für die Bestimmung der Haftung der Metallschicht zum Kunststoffträger wurde der oben beschriebene Prozess wiederholt und nach elektrochemischer Aufbringung der Kupfermetallschicht abgebrochen.

Die Dicke der aufgebrachten Kupfermetallschicht lag durchschnittlich bei 30 µm.

Die Haftung der Metallschicht zum Kunststoffträger wurde in einem Rollenschälversuch gemäß DIN 53494 (Version von 1989) bestimmt. Dafür wurden aus den oben beschriebenen Platten Probekörper mit einer Länge von 80 mm und einer Breite von (abweichend von der Norm) 10 mm ausgesägt. Die Abzugsgeschwindigkeit lag bei 50 mm/min. Die gemessene Abzugskraft wurde auf die Probenbreite normiert (Messwert in N/mm) und - unter Vernachlässigung der ersten und letzten 10 mm des Abzugsweges - über die gesamte Abzugsstrecke gemittelt. Die angegebenen Messwerte sind die Mittelwerte aus fünf Messungen.

Für die Ermittlung der im Aktivierungschritt des Galvanisierungsprozesses erzielten Palladium-Belegung wurde der zuvor beschriebene Galvanisierungsprozess wiederholt, jedoch nach der Zerstörung des Palladium-Kolloids abgebrochen. Die so vorbehandelten Platten wurden mit einer Mischung aus einem Volumenteil Königswasser und einem Volumenteil VE-Wasser behandelt und auf diese Weise die Palladiumkeime vollständig in Lösung gebracht. Der Palladium-Gehalt dieser Lösung wurde nach geeigneter Verdünnung mittels optischer Emissionsspektroskopie mit induktiv gekoppeltem Plasma (ICP-OES) ermittelt.

Die Wärmestandfestigkeit des galvanisierten Formteils (Platten der Dimensionen 150 mm x 100 mm x 2 mm) ist diejenige maximale Temperatur (variiert in Schritten von 5°C), bei der nach zweistündiger Lagerung unmittelbar nach Entnahme des Bauteils aus dem Ofen und Abkühlung auf Raumtemperatur kein Verzug sowie keinerlei Ablösung der Metallschicht (z.B. in Form von Blasenbildung) beobachtet wurde.

**Tabelle 1: Die Zusammensetzungen und ihre Eigenschaften**

| Komponenten [Gew.-Teile] | V1 | 2 | 3 | V4 | V5 | 6 | 7 | 8 | 9 | 10 | V11 | V12 | V13 | V14 | V15 | 16 | V17 |
|---|---|---|---|---|---|---|---|---|---|---|---|---|---|---|---|---|---|
| A-1 | 85 | | | | | | | | | | | | | | | | 80 |
| A-2 | | | | | | | 21,25 | 20 | | | | | | | | | |
| A-3 | | 85 | 42,5 | | | | | | 80 | 70 | 60 | 80 | 80 | 80 | 80 | 80 | |
| A-4 | | | 42,5 | 85 | | | 63,75 | 60 | | | | | | | | | |
| A-5 | | | | | 85 | | | | | | | | | | | | |
| A-6 | | | | | | 85 | | | | | | | | | | | |
| B-1 | 15 | 15 | 15 | 15 | 15 | 15 | 15 | 20 | 20 | 30 | 40 | 15 | 10 | 7 | 4 | | 20 |
| B-2 | | | | | | | | | | | | | | | | 17 | |
| C-1 | | | | | | | | | | | | 5 | 10 | 13 | 16 | 3 | |
| D-1 | 0,4 | 0,4 | 0,4 | 0,4 | 0,4 | 0,4 | 0,4 | 0,4 | 0,4 | 0,4 | 0,4 | 0,4 | 0,4 | 0,4 | 0,4 | 0,4 | 0,4 |
| D-2 | 0,02 | 0,02 | 0,02 | 0,02 | 0,02 | 0,02 | 0,02 | 0,02 | 0,02 | 0,02 | 0,02 | 0,02 | 0,02 | 0,02 | 0,02 | 0,02 | 0,02 |
| D-3 | 0,28 | 0,28 | 0,28 | 0,28 | 0,28 | 0,28 | 0,28 | 0,28 | 0,28 | 0,28 | 0,28 | 0,28 | 0,28 | 0,28 | 0,28 | 0,28 | 0,28 |
| D-4 | 0,004 | 0,004 | 0,004 | 0,004 | 0,004 | 0,004 | 0,004 | 0,004 | 0,004 | 0,004 | 0,004 | 0,004 | 0,004 | 0,004 | 0,004 | 0,004 | 0,004 |

| Rezeptur- charakteristik | | | | | | | | | | | | | | | | | |
|---|---|---|---|---|---|---|---|---|---|---|---|---|---|---|---|---|---|
| K [Gew.-%] | 7,5 | 7,5 | 7,5 | 7,5 | 7,5 | 7,5 | 7,5 | 10,0 | 10,0 | 15,0 | 20,0 | 7,5 | 5,0 | 3,5 | 2,0 | 10,0 | 10,0 |
| S [Gew.-%] | 3,0 | 3,0 | 3,0 | 3,0 | 3,0 | 3,0 | 3,0 | 4,0 | 4,0 | 6,0 | 8,0 | 8,0 | 12,0 | 14,4 | 16,8 | 4,7 | 4,0 |
| K/S | 2,5 | 2,5 | 2,5 | 2,5 | 2,5 | 2,5 | 2,5 | 2,5 | 2,5 | 2,5 | 2,5 | 0,9 | 0,4 | 0,2 | 0,1 | 2,1 | 2,5 |
| A_{cyc} [Gew.-%] | 0 | 11 | 28 | 45 | 68 | 36 | 34 | 34 | 11 | 11 | 11 | 11 | 11 | 11 | 11 | 11 | 0 |

| Eigenschaften | V1 | 2 | 3 | V4 | V5 | 6 | 7 | 8 | 9 | 10 | V11 | V12 | V13 | V14 | V15 | 16 | V17 |
|---|---|---|---|---|---|---|---|---|---|---|---|---|---|---|---|---|---|
| ak [kJ/m2] | 47 (d) | 45 (d) | 37 (d) | 28 (s) | 18s (s) | 23 (s) | 31 (d) | 31 (d) | 42 (d) | 37 (d) | 33 (d) | 44 (d) | 46 (d) | 46 (d) | 28 (s) | 43 (d) | 44 (d) |
| Vicat B120 [°C] | 140 | 147 | 158 | 171 | 190 | 173 | 162 | 159 | 144 | 136 | 126 | 143 | 143 | 143 | 143 | 142 | 139 |
| HDT/A [°C] | 116 | 119 | 129 | 143 | 160 | 146 | 136 | 131 | 116 | | | | | | | | 113 |
| MVR [ml/10min] | 7,6 | 8,6 | 5,5 | 3,6 | 2,1 | 5,0 | 6,5 | 3,8 | 5,7 | 3,9 | 1,9 | 13,6 | 21,7 | 25,8 | 31,0 | 6,7 | 7,8 |
| Viskosität bei 260°C [Pas] | 476 | 597 | | | | | | | 530 | 472 | 439 | 409 | 324 | 294 | 267 | 514 | 448 |
| Viskosität bei 300°C [Pas] | | 254 | 323 | 418 | 641 | 375 | 302 | 281 | 237 | | | | | | | | |
| Pd [mg/m²] | n.g | 5,8 | 5,6 | 5,5 | 4,8 | 6,5 | 4,8 | 6,0 | 8,8 | 16,5 | 25,0 | 7,0 | 6,9 | 5,6 | 5,4 | 12,0 | n.g. |
| Galvanisierung | i.O. | i.O. | i.O. | i.O. | i.O. | i.O. | i.O. | i.O. | i.O. | i.O. | i.O. | i.O. | Blasen | Blasen | Blasen | i.O. | i.O. |
| Haftung [N/mm] | n.g | 0,31 | 0,20 | 0,13 | 0,07 | 0,39 | 0,21 | 0,39 | 0,46 | 0,42 | 0,48 | 0,16 | 0,09 | 0,04 | 0,04 | 0,30 | n.g. |
| Wärmestandfestigkeit [°C] | 130 | 140 | 150 | 155 | 150 | 150 | n.g | 150 | 140 | 150 | 140 | <115 | n.g. | n.g. | n.g. | 145 | 130 |

| | | | | | | | | | | | | | | | | | |
|---|---|---|---|---|---|---|---|---|---|---|---|---|---|---|---|---|---|
| i.O: In Ordnung n.g.: nicht gemessen | | | | | | | | | | | | | | | | | |

Die Beispiele zeigen, dass die erfindungsgemäßen Zusammensetzungen 2, 3, 6 bis 8, 10, 11 und 17 die der Erfindung zu Grunde liegende Aufgabe erfüllen, während die Vergleichsbeispiele im mindestens einer Eigenschaft vom Zieleigenschaftsprofil abweichen.

Bei den Zusammensetzungen gemäß der Vergleichsbeispiele V1 und V17, in denen kein Polycarbonat enthaltend von Bis-(4-hydroxyphenyl)-Verbindungen abgeleitete Monomereinheiten, die über die 1,1'-Stellung eines cyclischen, gegebenenfalls mit Heteroatomen substituierten Kohlenwasserstoffs verbrückt sind, eingesetzt wird, resultiert im galvanisierten Bauteil eine unzureichende Wärmestandfestigkeit.

Bei den Zusammensetzungen gemäß der Vergleichsbeispiele V4 und V5, in denen dagegen ein Polycarbonat mit zu hohem Gehalt an von Bis-(4-hydroxyphenyl)-Verbindungen abgeleiteten Monomereinheiten, die über die 1,1'-Stellung eines cyclischen, gegebenenfalls mit Heteroatomen substituierten Kohlenwasserstoffs verbrückt sind, eingesetzt wird, resultiert eine unzureichende Haftung der Metallschicht an den Kunststoffträger und eine nachteilige Materialzähigkeit.

Die Zusammensetzung gemäß Vergleichsbeispiel V11 mit zu niedrigem Gehalt an Polycarbonat weist eine unzureichende Wärmeformbeständigkeit (Vicat B120) auf.

Die Zusammensetzung gemäß Vergleichsbeispiel V12 verwendet dieselbe PolycarbonatKomponente wie die erfindungsgemäße Zusammensetzung 2 und weist auch denselben Kautschukgehalt auf. Sie zeigt jedoch gegenüber der Zusammensetzung 2, welche eine geringeren Gehalt an freiem Vinylcopolymer S und daher ein höheres Verhältnis von K/S aufweist, eine unzureichende Haftung der Metallschicht an den Kunststoffträger. Gleiches gilt für die Vergleichsbeispiele V13 bis V15 mit weiter reduziertem Verhältnis K/S.

## Patentansprüche

1. Zusammensetzungen bestehend aus
A) 70 bis 90 Gew.-Teilen mindestens eines Polycarbonats,
B) 10 bis 30 Gew.-Teilen mindestens eines Pfropfpolymerisats enthaltend eine Dien enthaltende kautschukelastische partikuläre Pfropfgrundlage und eine Vinyl(co)polymerisathülle,
C) 0 bis 15 Gew.-Teilen mindestens eines Additivs,
wobei die Summe der Gewichtsteile der Komponenten A) und B) in der Zusammensetzung auf 100 normiert ist,
(i) **dadurch gekennzeichnet, dass** der Kautschukgehalt aus Komponente B in der Zusammensetzung mindestens 6 Gew.-% beträgt,
(ii) **dadurch gekennzeichnet, dass** das Verhältnis K/S der Gewichtsanteile an Dien enthaltender kautschukelastischer partikulärer Pfropfgrundlage aus Komponente B) in der Zusammensetzung (=K) zur Summe aus freiem, das heißt nicht an die Kautschukgrundlage im Pfropfpolymer gemäß Komponente B) kovalent gebundenem Vi-ny(co)polymerisat aus Komponente B) und etwaigen freiem Vinyl(co)polymerisat aus Komponente C) in der Zusammensetzung (=S) mindestens 1,5 beträgt,
(iii) **dadurch gekennzeichnet, dass** die Komponente A) mindestens eine Monomereinheit enthält, welche ausgewählt ist aus der Gruppe bestehend aus Monomereinheiten beschrieben durch die allgemeine Formel (2) 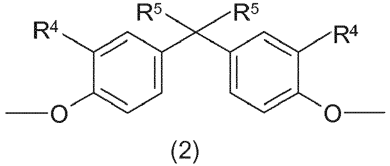 in der
R⁴ für H, lineare oder verzweigte C₁-C₁₀ Alkyl, bevorzugt lineare oder verzweigte C₁-C₆ Alkyl, besonders bevorzugt für lineare oder verzweigte C₁-C₄ Alkyl, ganz besonders bevorzugt für H oder C₁-Alkyl (Methyl) steht, und
R⁵ für lineare oder verzweigte C₁-C₁₀ Alkyl, bevorzugt lineare oder verzweigte C₁-C₆ Alkyl, besonders bevorzugt für lineare oder verzweigte C₁-C₄ Alkyl, ganz besonders bevorzugt für C₁-Alkyl (Methyl) steht,
und mindestens eine von einer Bis-(4-hydroxyphenyl)-Verbindung abgeleitete Monomereinheit enthält, die über die 1,1'-Stellung eines cyclischen, gegebenenfalls mit Heteroatomen substituierten Kohlenwasserstoffs verbrückt ist,
(iv) **dadurch gekennzeichnet, dass** der Anteil (A_{cyc}) an von Bis-(4-hydroxyphenyl)-Verbindungen abgeleiteten Monomereinheiten, die über die 1,1'-Stellung eines cyclischen, gegebenenfalls mit Heteroatomen substitutierten Kohlenwasserstoffs verbrückt sind, bezogen auf die Summe aller von Bisphenolen abgeleiteten Monomereinheiten in der Komponente A) im Bereich von 5 bis 40 Gew.-% liegt und
(v) **dadurch gekennzeichnet, dass** die Komponente A) eine relative Lösungsviskosität von 1,20 bis 1,28, bestimmt nach DIN 51562 in Methylenchlorid, aufweist.

2. Zusammensetzung gemäß Anspruch 1, bestehend aus
A) 80 bis 85 Gew.-Teilen mindestens eines aromatischen Polycarbonats,
B) 15 bis 20 Gew.-Teilen mindestens eines Pfropfpolymerisats enthaltend eine Dien enthaltende kautschukelastische partikuläre Pfropfgrundlage und eine Vinyl(co)polymerisathülle,
C) 0,2 bis 3 Gew.-Teilen mindestens eines Additivs,
wobei die Summe der Gewichtsteile der Komponenten A) und B) in der Zusammensetzung auf 100 normiert ist.

3. Zusammensetzung gemäß Anspruch 1 oder 2, **dadurch gekennzeichnet, dass** als Komponente C ein oder mehrere Additive ausgewählt aus der Gruppe bestehend aus Flammschutzmitteln, Antidrippingmitteln, Flammschutzsynergisten, Rauchinhibitoren , Gleit- und Entformungsmitteln, Nukleiermitteln, Antistatika, Leitfähigkeitsadditiven, Stabilisatoren, Fließfähigkeitspromotoren, Verträglichkeitsvermittlern, weiteren von Komponente B verschiedene Schlagzähigkeitsmodifikatoren, weiteren polymeren Bestandteilen, Füll- und Verstärkungsstoffen sowie Farbstoffen und Pigmenten zum Einsatz kommen.

4. Zusammensetzung gemäß einem der vorherigen Ansprüche, **dadurch gekennzeichnet, dass** der Kautschukgehalt aus Komponente B in der Zusammensetzung mindestens 9 Gew.-% beträgt.

5. Zusammensetzung gemäß einem der vorherigen Ansprüche, **dadurch gekennzeichnet, dass** das Verhältnis K/S mindestens 2,1 beträgt.

6. Zusammensetzung gemäß einem der vorherigen Ansprüche, **dadurch gekennzeichnet, dass** A_{cyc} zwischen 10 und 35 Gew.-% liegt.

7. Zusammensetzung gemäß einem der vorherigen Ansprüche, **dadurch gekennzeichnet, dass** die von Bis-(4-hydroxyphenyl)-Verbindungen abgeleiteten Monomereinheiten, die über die 1,1'-Stellung eines cyclischen, gegebenenfalls mit Heteroatomen substituierten Kohlenwasserstoffs verbrückt sind, ausgewählt sind aus den Strukturen, die durch die Formeln 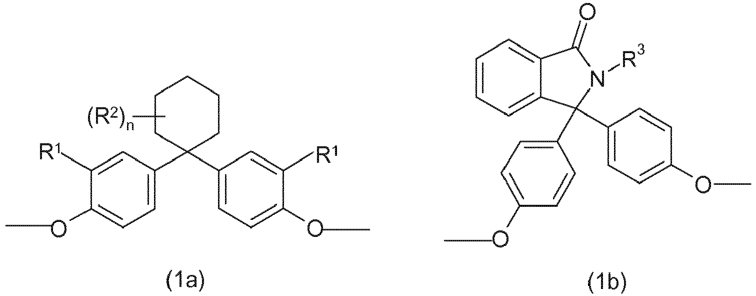 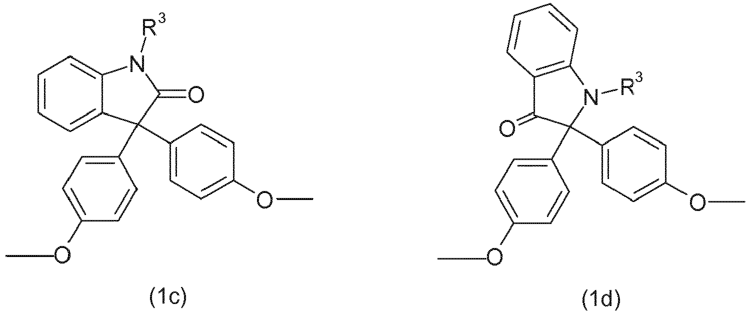 in denen
R¹ für Wasserstoff oder C₁-C₄-Alkyl,
R² für C₁-C₄-Alkyl,
n für 0, 1, 2 oder 3 und
R³ für C₁-C₄-Alkyl, Aralkyl oder Aryl steht,
beschrieben sind.

8. Zusammensetzung gemäß einem der vorherigen Ansprüche, **dadurch gekennzeichnet, dass** die von Bis-(4-hydroxyphenyl)-Verbindungen abgeleiteten Monomereinheiten, die über die 1,1'-Stellung eines cyclischen, gegebenenfalls mit Heteroatomen substituierten Kohlenwasserstoffs verbrückt sind, ausgewählt sind aus den Strukturen, die durch die Formel (1a) beschrieben werden.

9. Zusammensetzung gemäß einem der vorherigen Ansprüche, **dadurch gekennzeichnet, dass** die von Bis-(4-hydroxyphenyl)-Verbindungen abgeleitete Monomereinheit, die über die 1,1'-Stellung eines cyclischen, gegebenenfalls mit Heteroatomen substituierten Kohlenwasserstoffs verbrückt ist, von 1,1-Bis-(4-hydroxyphenyl)-3,3',5-trimethylcyclohexan abgeleitet ist.

10. Zusammensetzung gemäß einem der vorherigen Ansprüche, **dadurch gekennzeichnet, dass** die relative Lösungsviskosität der Komponente A im Bereich von 1,22 bis 1,26 liegt.

11. Zusammensetzung gemäß einem der vorherigen Ansprüche, **dadurch gekennzeichnet, dass** bei Einsatz von Copolycarbonaten basierend auf mindestens einer Monomereinheit ausgewählt aus der Gruppe charakterisiert durch die allgemeinen Formel (1a) und mindestens einer Monomereinheit ausgewählt aus der Gruppe charakterisiert durch die allgemeinen Formel (2) die relative Lösungsviskosität dieses in Komponente A eingesetzten Copolymers im Bereich von 1,23 - 1,27 liegt.

12. Zusammensetzung gemäß einem der vorherigen Ansprüche, **dadurch gekennzeichnet, dass** bei Einsatz von Homo- oder Copolycarbonaten basierend auf mindestens einer Monomereinheit ausgewählt aus der Gruppe charakterisiert durch die allgemeine Formel (2), welche keine von Bis-(4-hydroxyphenyl)-Verbindungen abgeleitete Monomereinheiten, die über die 1,1'-Stellung eines cyclischen, gegebenenfalls mit Heteroatomen substituierten Kohlenwasserstoffs verbrückt sind, enthalten, die relative Lösungsviskosität dieses in Komponente A eingesetzten Homo- oder Copolymers im Bereich von 1,20 - 1,28 liegt.

13. Zusammensetzung gemäß einem der vorherigen Ansprüche, **dadurch gekennzeichnet, dass** der Anteil der Kautschukpartikel in der Pfropfgrundlage B.2 mit einem Durchmesser von <200 nm mindestens 20 Gew.-% beträgt.

14. Verwendung von Zusammensetzungen gemäß einem der Ansprüche 1 bis 13 zur Herstellung eines Bauteils enthaltend einen Kunststoff-Träger und eine mehrlagige Metallschicht.

15. Formkörper hergestellt aus einer der Zusammensetzungen gemäß Anspruch 1 bis 13.

## Claims

1. Compositions consisting of
A) 70 to 90 parts by weight of at least one polycarbonate,
B) 10 to 30 parts by weight of at least one graft polymer comprising a diene-containing elastomeric particulate graft base and a vinyl (co)polymer sheath,
C) 0 to 15 parts by weight of at least one additive, wherein the sum of the parts by weight of components A) and B) in the composition is normalized to 100,
(i) **characterized in that** the rubber content from component B in the composition is at least 6 wt%,
(ii) **characterized in that** the ratio K/S of the weight fractions of diene-containing elastomeric particulate graft base from component B) in the composition (=K) to the sum of free, i.e. not covalently bonded to the rubber base in the graft polymer according to component B), vinyl (co)polymer from component B) and any free vinyl (co)polymer from component C) in the composition (=S) is at least 1.5,
(iii) **characterized in that** component A) comprises at least one monomer unit selected from the group consisting of monomer units described by general formula (2) 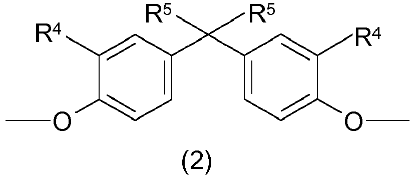 in which
R⁴ represents H, linear or branched C₁-C₁₀ alkyl, preferably linear or branched C₁-C₆ alkyl, particularly preferably linear or branched C₁-C₄ alkyl, very particularly preferably H or C₁-alkyl (methyl), and
R⁵ represents linear or branched C₁-C₁₀ alkyl, preferably linear or branched C₁-C₆ alkyl, particularly preferably linear or branched C₁-C₄ alkyl, very particularly preferably C₁-alkyl (methyl),
and at least one monomer unit derived from a bis(4-hydroxyphenyl) compound and bridged via the 1,1'-position of a cyclic hydrocarbon optionally substituted with heteroatoms,
(iv) **characterized in that** the proportion (A_{cyc}) of monomer units derived from bis(4-hydroxyphenyl) compounds and bridged via the 1,1'-position of a cyclic hydrocarbon optionally substituted with heteroatoms based on the sum of all monomer units derived from bisphenols in component A) is in the range rom 5 to 40 wt% and
(v) **characterized in that** component A) has a relative solution viscosity of 1.20 to 1.28 determined according to DIN 51562 in methylene chloride.

2. Composition according to Claim 1, consisting of
A) 80 to 85 parts by weight of at least one aromatic polycarbonate,
B) 15 to 20 parts by weight of at least one graft polymer comprising a diene-containing elastomeric particulate graft base and a vinyl (co)polymer sheath,
C) 0.2 to 3 parts by weight of at least one additive, wherein the sum of the parts by weight of components A) and B) in the composition is normalized to 100.

3. Composition according to Claim 1 or 2, **characterized in that** as component C one or more additives selected from the group consisting of flame retardants, anti-drip agents, flame retardant synergists, smoke inhibitors, lubricants and demolding agents, nucleating agents, antistats, conductivity additives, stabilizers, flow promoters, compatibilizers, further impact modifiers distinct from component B, further polymeric constituents, fillers and reinforcers and also dyes and pigments are employed.

4. Composition according to any of the preceding claims, **characterized in that** the rubber content from component B in the composition is at least 9 wt%.

5. Composition according to any of the preceding claims, **characterized in that** the ratio K/S is at least 2.1.

6. Composition according to any of the preceding claims, **characterized in that** A_{cyc} is between 10 and 35 wt%.

7. Composition according to any of the preceding claims, **characterized in that** the monomer units derived from bis(4-hydroxyphenyl) compounds and bridged via the 1,1'-position of a cyclic hydrocarbon optionally substituted with heteroatoms are selected from the structures described by the formulae 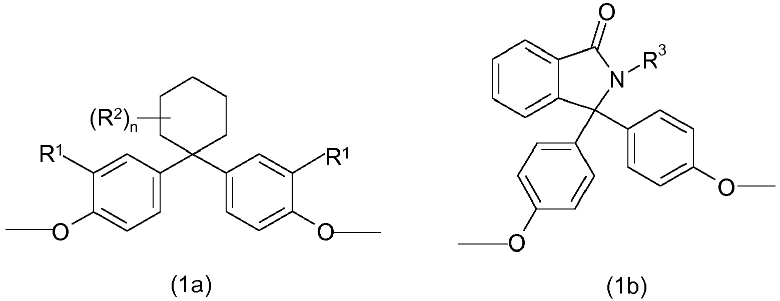 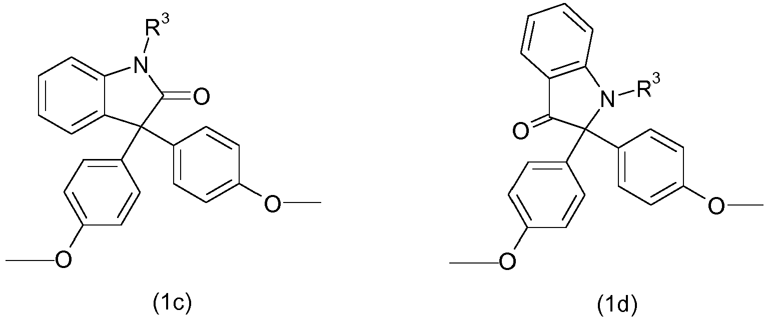 in which
R¹ represents hydrogen or C₁-C₄-alkyl,
R² represents C₁-C₄-alkyl,
n represents 0, 1, 2 or 3 and
R³ represents C₁-C₄-alkyl, aralkyl or aryl.

8. Composition according to any of the preceding claims, **characterized in that** the monomer units derived from bis(4-hydroxyphenyl) compounds and bridged via the 1,1'-position of a cyclic hydrocarbon optionally substituted with heteroatoms are selected from the structures described by the formula (1a).

9. Composition according to any of the preceding claims, **characterized in that** the monomer unit derived from bis(4-hydroxyphenyl) compounds and bridged via the 1,1'-position of a cyclic hydrocarbon optionally substituted with heteroatoms is derived from 1,1-bis(4-hydroxyphenyl)-3,3' ,5-trimethylcyclohexane.

10. Composition according to any of the preceding claims, **characterized in that** the relative solution viscosity of component A is in the range from 1.22 to 1.26.

11. Composition according to any of the preceding claims, **characterized in that** when using copolycarbonates based on at least one monomer unit selected from the group **characterized by** general formula (1a) and at least one monomer unit selected from the group **characterized by** general formula (2) the relative solution viscosity of this copolymer employed in component A is in the range of 1.23 - 1.27.

12. Composition according to any of the preceding claims, **characterized in that** when using homo- or copolycarbonates based on at least one monomer unit selected from the group **characterized by** general formula (2) which comprise no monomer units derived from bis(4-hydroxyphenyl) compounds and bridged via the 1,1'-position of a cyclic hydrocarbon optionally substituted with heteroatoms the relative solution viscosity of this homo- or copolymer employed in component A is in the range of 1.20 - 1.28.

13. Composition according to any of the preceding claims, **characterized in that** the proportion of rubber particles in the graft base B.2 having a diameter of <200 nm is at least 20 wt%.

14. Use of compositions according to any of Claims 1 to 13 for producing a component part comprising a plastics carrier and a multi-ply metal layer.

15. Molded article produced from any of the compositions according to Claims 1 to 13.

## Revendications

1. Compositions, constituées par :
A) 70 à 90 parties en poids d'au moins un polycarbonate,
B) 10 à 30 parties en poids d'au moins un polymère greffé contenant une base de greffage particulaire à l'élasticité du caoutchouc, contenant un diène, et une enveloppe de (co)polymère de vinyle,
C) 0 à 15 parties en poids d'au moins un additif,
la somme des parties en poids des composants A) et B) dans la composition étant normée à 100,
(i) **caractérisées en ce que** la teneur en caoutchouc du composant B dans la composition est d'au moins 6 % en poids,
(ii) **caractérisées en ce que** le rapport K/S entre les proportions en poids de la base de greffage particulaire à l'élasticité du caoutchouc, contenant un diène, du composant B) dans la composition (= K) et la somme du (co)polymère de vinyle libre du composant B), c'est-à-dire non relié de manière covalente à la base de greffage caoutchoutique dans le polymère greffé selon le composant B) et du (co)polymère de vinyle libre éventuel du composant C) dans la composition (= S) est d'au moins 1,5,
(iii) **caractérisées en ce que** le composant A) contient au moins une unité monomère qui est choisie dans le groupe constitué par les unités monomères décrites par la formule générale (2) : 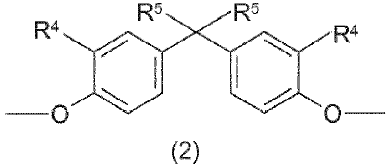 dans laquelle
R⁴ représente H, alkyle en C₁-C₁₀ linéaire ou ramifié, de préférence alkyle en C₁-C₆ linéaire ou ramifié, de manière particulièrement préférée alkyle en C₁-C₄ linéaire ou ramifié, de manière tout particulièrement préférée H ou alkyle en C₁ (méthyle), et
R⁵ représente alkyle en C₁-C₁₀ linéaire ou ramifié, de préférence alkyle en C₁-C₆ linéaire ou ramifié, de manière particulièrement préférée alkyle en C₁-C₄ linéaire ou ramifié, de manière tout particulièrement préférée alkyle en C₁ (méthyle),
et contient au moins une unité monomère dérivée d'un composé de bis-(4-hydroxyphényle), qui est pontée à la position 1,1' d'un hydrocarbure cyclique, éventuellement substitué avec des hétéroatomes,
(iv) **caractérisées en ce que** la proportion (A_{cyc}) d'unités monomères dérivées de composés de bis-(4-hydroxyphényle) qui sont pontées à la position 1,1' d'un hydrocarbure cyclique, éventuellement substitué avec des hétéroatomes, par rapport à la somme de toutes les unités monomères dérivées de bisphénols dans le composant A), se situe dans la plage allant de 5 à 40 % en poids, et
(v) **caractérisées en ce que** le composant A) présente une viscosité en solution relative de 1,20 à 1,28, déterminée selon DIN 51562 dans du chlorure de méthylène.

2. Composition selon la revendication 1, constituée par :
A) 80 à 85 parties en poids d'au moins un polycarbonate aromatique,
B) 15 à 20 parties en poids d'au moins un polymère greffé contenant une base de greffage particulaire à l'élasticité du caoutchouc, contenant un diène, et une enveloppe de (co)polymère de vinyle,
C) 0,2 à 3 parties en poids d'au moins un additif,
la somme des parties en poids des composants A) et B) dans la composition étant normée à 100.

3. Composition selon la revendication 1 ou 2, **caractérisée en ce qu'**un ou plusieurs additifs choisis dans le groupe constitué par les agents ignifuges, les agents anti-égouttement, les synergistes ignifuges, les inhibiteurs de fumée, les agents lubrifiants et de démoulage, les agents de nucléation, les antistatiques, les additifs de conductivité, les stabilisateurs, les promoteurs de fluidité, les agents de compatibilisation, les autres modificateurs de la résistance aux impacts différents du composant B), les autres constituants polymères, les charges et les matières renforçantes, ainsi que les colorants et les pigments sont utilisés en tant que composant C).

4. Composition selon l'une quelconque des revendications précédentes, **caractérisée en ce que** la teneur en caoutchouc du composant B) dans la composition est d'au moins 9 % en poids.

5. Composition selon l'une quelconque des revendications précédentes, **caractérisée en ce que** le rapport K/S est d'au moins 2,1.

6. Composition selon l'une quelconque des revendications précédentes, **caractérisée en ce qu'**A_{cyc} est compris entre 10 et 35 % en poids.

7. Composition selon l'une quelconque des revendications précédentes, **caractérisée en ce que** les unités monomères dérivées de composés de bis-(4-hydroxyphényle) qui sont pontées à la position 1,1' d'un hydrocarbure cyclique, éventuellement substitué avec des hétéroatomes, sont choisies parmi les structures qui sont décrites par les formules : 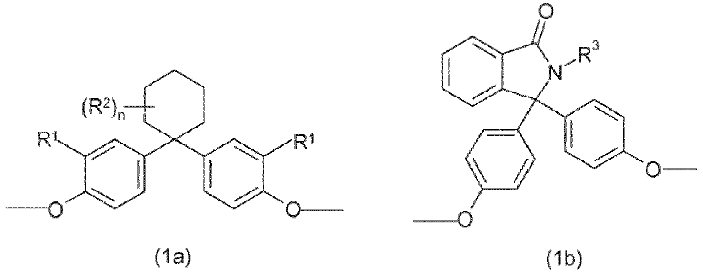 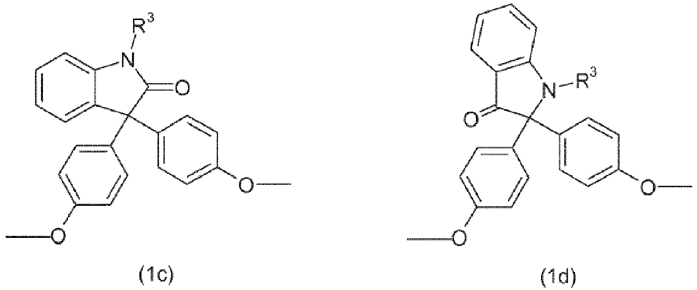 dans lesquelles
R¹ représente hydrogène ou alkyle en C₁-C₄,
R² représente alkyle en C₁-C₄,
n représente 0, 1, 2 ou 3, et
R³ représente alkyle en C₁-C₄, aralkyle ou aryle.

8. Composition selon l'une quelconque des revendications précédentes, **caractérisée en ce que** les unités monomères dérivées de composés de bis-(4-hydroxyphényle) qui sont pontées à la position 1,1' d'un hydrocarbure cyclique, éventuellement substitué avec des hétéroatomes, sont choisies parmi les structures qui sont décrites par la formule (1a).

9. Composition selon l'une quelconque des revendications précédentes, **caractérisée en ce que** l'unité monomère dérivée de composés de bis-(4-hydroxyphényle) qui est pontée à la position 1,1' d'un hydrocarbure cyclique, éventuellement substitué avec des hétéroatomes, est dérivée de 1,1-bis-(4-hydroxyphényl)-3,3'-triméthylcyclohexane.

10. Composition selon l'une quelconque des revendications précédentes, **caractérisée en ce que** la viscosité en solution relative du composant A) se situe dans la plage allant de 1,22 à 1,26.

11. Composition selon l'une quelconque des revendications précédentes, **caractérisée en ce que** lors de l'utilisation de copolycarbonates à base d'au moins une unité monomère choisie dans le groupe **caractérisé par** la formule générale (1a) et d'au moins une unité monomère choisie dans le groupe **caractérisé par** la formule générale (2), la viscosité en solution relative de ce copolymère utilisé dans le composant A) se situe dans la plage allant de 1,23 à 1,27.

12. Composition selon l'une quelconque des revendications précédentes, **caractérisée en ce que** lors de l'utilisation d'homo- ou de copolycarbonates à base d'au moins une unité monomère choisie dans le groupe **caractérisé par** la formule générale (2), qui ne contiennent pas d'unités monomères dérivées de composés de bis-(4-hydroxyphényle) qui sont reliées à la position 1,1' d'un hydrocarbure cyclique, éventuellement substitué avec des hétéroatomes, la viscosité relative de cet homopolymère ou de ce copolymère utilisé dans le composant A) se situe dans la plage allant de 1,20 à 1,28.

13. Composition selon l'une quelconque des revendications précédentes, **caractérisée en ce que** la proportion de particules de caoutchouc dans la base de greffage B.2 ayant un diamètre < 200 nm est d'au moins 20 % en poids.

14. Utilisation de compositions selon l'une quelconque des revendications 1 à 13 pour la fabrication d'un composant contenant un support en matière plastique et une couche métallique multicouche.

15. Corps moulé fabriqué à partir d'une des compositions selon les revendications 1 à 13.
